# EUROPEAN PATENT SPECIFICATION

(11) **EP 2 707 201 B1**
(45) Date of publication and mention of the grant of the patent: **14.01.2015**
(21) Application number: 12726489.3
(22) Date of filing: 04.05.2012
(51) Int. Cl.: B29D 30/42, B29D 30/70, B29D 30/30

(54) **PROCESS AND PLANT FOR BUILDING TYRES FOR VEHICLE WHEELS**
VERFAHREN UND ANLAGE ZUR HERSTELLUNG VON REIFEN FUER FAHRZEUGRÄDER
PROCEDE ET INSTALLATION DE FABRICATION DE PNEUS POUR ROUES DE VEHICULE

(30) Priority: 12.05.2011 IT MI20110822; 18.05.2011 US 201161487564 P
(43) Date of publication of application: 19.03.2014
(73) Proprietor: Pirelli Tyre S.p.A., 20126 Milano (IT)
(72) Inventor: MARCHINI, Maurizio, 20126 Milano (IT); AMURRI, Cesare, Emanuele, 20126 Milano (IT); FABBRETTI, Marco, 20126 Milano (IT)
(74) Representative: Castiglia, Paolo
(86) International application number: PCT/IB2012/000886
(87) International publication number: WO 2012/153175

(56) References cited:
- WO-A1-01/38077
- WO-A1-2004/056558
- WO-A2-2010/066895
- JP-A- 11 034 181
- JP-A- 58 076 246
- US-A1- 2004 011 454
- US-A1- 2009 032 181

## Description

The present invention relates to a process for building tyres for vehicle wheels.

The invention also relates to a plant for building tyres for vehicle wheels, the above process being implementable in said plant.

A tyre for vehicle wheel generally comprises a carcass structure comprising at least one carcass ply comprised of reinforcing cords embedded in an elastomeric matrix. The carcass ply has end edges respectively engaged with annular anchoring structures. The latter are arranged in the areas of the tyre usually identified by the name of "beads" and each of them is normally formed by a substantially circumferential annular insert on which at least one filling insert is applied, in a radially outer position thereof. Such annular inserts are commonly identified as "bead cores" and have the task of keeping the tyre well fixed to the anchoring seat specifically provided in the rim of the wheel, thus preventing, in operation, the radially inner end edge of the tyre coming out from such seat.

At the beads specific reinforcing structures may be provided having the function of improving the torque transmission to the tyre.

A crown structure is associated in a radially outer position with respect to the carcass structure, the crown structure comprising a belt structure and, in a radially outer position with respect to the belt structure, a tread band made of elastomeric material.

In the case of tyres for cars, the belt structure typically comprises at least two belt layers arranged radially one on top of the other and having textile or metal reinforcing cords with overall crossed orientation and/or an orientation substantially parallel to the direction of circumferential extension of the tyre.

Between the carcass structure and the belt structure a layer of elastomeric material, known as "under-belt", can be provided, said layer having the function of making the radially outer surface of the carcass structure as uniform as possible for the subsequent application of the belt structure.

Between the tread band and the belt structure a so-called "under-layer" of elastomeric material can be arranged, said under-layer having properties suitable for ensuring a steady union of the tread band itself.

On the side surfaces of the carcass structure respective sidewalls of elastomeric material are also applied, each extending from one of the side edges of the tread band up to the respective annular anchoring structure to the beads.

The traditional processes for manufacturing tyres for vehicle wheels essentially provide for the components of the tyre listed above to be first made separately from one another, to be then assembled on a proper forming drum.

However, the current trend is to use manufacturing processes that allow minimising or, if possible, eliminating the manufacturing and storage of semi-finished parts.

Throughout the present description and in the following claims, the terms "radial" and "axial" and the expressions "radially inner/outer" and "axially inner/outer" are used with reference to the radial direction and to the axial direction of a forming support. The terms "circumferential" and "circumferentially" instead, are used referring to the annular extension of the forming support.

Throughout the present description and in following claims, the terms "horizontal" and "vertical" are used for defining directions respectively parallel and perpendicular to a support surface of the forming support, typically the ground.

Throughout the present description and in the following claims, the expression: "elastomeric material" is used to indicate a composition comprising at least one elastomeric polymer and at least one reinforcing filler. Preferably, such composition further comprises additives such as, for example, a cross-linking agent and/or a plasticizer. Thanks to the provision of the cross-linking agent, such material may be cross-linked by heating, so as to make the end product.

Throughout the present description and in the following claims, the expression "reinforced band-like element" is used to indicate an elongated product having a cross-sectional profile with a flat shape and comprising one or more cords, preferably made of metal, extending parallel to the longitudinal extension of the product and incorporated in, or at least partly covered by, at least one layer of elastomeric material.

Throughout the present description and in the following claims, the term "strip-like element" is used to indicate an element having a predetermined length and cut to size from said reinforced band-like element, with a predetermined cutting angle in the range between 0° and any value below 90°.

WO 01/38077, by the same Applicant, describes a method for building a belt structure of a tyre for vehicle wheels, wherein the belt structure is built by depositing in a circumferential sequence and in a side-by-side relation a plurality of strip-like elements directly onto a toroidal support.

EP 1 350 616 describes a method for manufacturing a structural element of a tyre, such as for example a carcass ply or a belt layer, starting from a continuous band-like element repeatedly cut to size in order to form a plurality of strip-like elements that are sequentially deposited on a conveyor belt so that each strip-like element is partly overlapped to the adjacent strip-like element, so as to form a continuous layer intended to be then transferred to a forming support.

US 204/0011454, US 2009/0032181 and WO 2004/056557 discloses apparatuses and methods for building belt structures.

The Applicant has noted that, in a solution of the type described in WO 01/38077, since there is the need of making the strip-like elements have an inclined orientation with respect to the axial direction once they have been deposited on the forming support, each strip-like element is deposited on a curved surface, with consequent deformation of the strip-like element. Such deformation varies as the longitudinal and transversal dimension of the strip-like element varies, besides upon the variation of the type and adhesiveness of the elastomeric material mixture thereof. All of the above unavoidably affects the quality and the positioning repeatability of the single strip-like element on the forming support. Moreover, depositing on a curved surface imposes a limit on the deposition speed, to the disadvantage of the overall time needed for building the belt structure. Depositing on a curved surface further requires a deposition apparatus movable in a synchronised manner with respect to two axes (that is, capable of allowing a synchronised movement of each strip-like element in horizontal direction and in vertical direction); such apparatus is mechanically complicated and subject to failures. The apparatus setup is equally complicated due to the fact that said synchronisation requires checking several parameters.

The Applicant has then observed that the time required for completing the building of a belt structure comprising at least two belt layers radially overlapped to each other with a method of the type described in EP 1 350 616 is long, even though such method requires a flat deposition of the strip-like elements.

The Applicant has verified that such drawback results from the fact that the preventive deposition on the conveyor belt of those strip-like elements intended to form the second belt layer and the subsequent transfer of such strip-like elements on the forming support may only occur at the end of the transfer to the forming support of those strip-like elements intended to form the first belt layer, such strip-like elements having been previously deposited on said conveyor belt.

In order to reduce the overall time needed for building the belt structure, the Applicant has perceived that it is advisable carrying out at least part of the building of the first belt layer simultaneously with at least part of the building of the second belt layer.

Finally, the Applicant has found that by providing two separate conveyor belts whereon strip-like elements cut to size from two separate reinforced band-like elements are deposited, and providing also for the possibility of moving the forming support between a first operating position at one of said conveyor belts (first conveyor belt) and a second operating position at the other conveyor belt (second conveyor belt), it is possible to carry out the deposition of the strip-like elements on the second conveyor belt simultaneously with the transfer to the forming support of the strip-like elements previously deposited on the first conveyor belt and thereafter, move the forming support to the second operating position for allowing the transfer to the forming support of the strip-like elements already deposited on the second conveyor belt.

In a first aspect thereof, the present invention therefore relates to a process for building tyres for vehicle wheels, comprising:
- manufacturing a carcass structure;
- manufacturing a crown structure;
- associating the crown structure in a radially outer position with respect to the carcass structure;
wherein manufacturing a crown structure comprises building a belt structure on a first forming support;
wherein building said belt structure comprises:
- sequentially depositing, on a first conveyor belt, a predetermined number of strip-like elements;
- sequentially depositing, on at least one second conveyor belt, a predetermined number of strip-like elements;
- transferring said strip-like elements from said first conveyor belt to said first forming support so as to build a first belt layer on said first forming support;
- moving said first forming support up to said at least one second conveyor belt;
- transferring said strip-like elements from said at least one second conveyor belt to said first forming support so as to build at least one second belt layer on said first forming support in a radially outer position with respect to said first belt layer;
wherein transferring said strip-like elements from said first conveyor belt to said first forming support is at least partially carried out simultaneously with at least part of depositing said strip-like elements on said at least one second conveyor belt.

The Applicant believes that the process of the present invention allows a substantial reduction of the overall time needed for building the belt structure to be achieved. In fact, in the process of the present invention the building of the first belt layer on the first forming support takes place while the strip-like elements intended to form the second belt layer are deposited on the second conveyor belt, so that once the first forming support has been brought at the second belt layer (at the end of the transfer to the first forming support of the strip-like elements deposited on the first conveyor belt), the transfer to the same first forming support of the strip-like elements already deposited on the second conveyor belt, and therefore the building of the second belt layer on said first forming support, can immediately occur.

In a second aspect thereof, the present invention relates to a plant for building tyres for vehicle wheels, as recited in claim 14.

Advantageously, such a plant allows carrying out the process of the present invention mentioned above and thus, achieving the advantages discussed above.

The present invention, in at least one of the above aspects thereof, can exhibit at least one of the following preferred features.

Preferably, moving said first forming support up to said at least one second conveyor belt is at least partially carried out simultaneously with at least part of depositing said strip-like elements on said at least one second conveyor belt. It is therefore possible to achieve a further substantial reduction of the overall time needed for building the belt structure.

Preferably, depositing said strip-like elements on said first conveyor belt is at least partially carried out simultaneously with at least part of depositing said strip-like elements on said at least one second conveyor belt. It is therefore possible to achieve a further substantial reduction of the overall time needed for building the belt structure.

In preferred embodiments of the present invention, building said belt structure comprises, prior to transferring said strip-like elements from said first conveyor belt to said first forming support, moving said first forming support up to said first conveyor belt.

Preferably, moving said first forming support up to said first conveyor belt is at least partially carried out simultaneously with at least part of depositing said strip-like elements on said first conveyor belt. It is therefore possible to achieve a further substantial reduction of the overall time needed for building the belt structure.

Even more preferably, moving said first forming support up to said first conveyor belt is at least partially carried out simultaneously with at least part of depositing said strip-like elements on said at least one second conveyor belt. It is therefore possible to achieve an even further substantial reduction of the overall time needed for building the belt structure.

In preferred embodiments of the present invention, said strip-like elements are deposited on said first conveyor belt and on said at least one second conveyor belt, respectively, at a distance from one another having a value comprised between 0 and a predetermined value.

Such a provision allows belt layers to be built which are substantially homogeneous and free from undesired overlapped joined ends, thereby obtaining tyres with high quality and performance levels. Advantageously, a high operating flexibility is achieved; in fact, depending on the fitting diameter of the tyre to be built, the inclination angle of the strip-like elements and the length thereof in the circumferential direction, it is possible to select each time the distance between the various strip-like elements, such distance being selected so as to always be able to deposit a predetermined whole number of strip-like elements having the same width and length, without overlapped joined ends and equally spaced from each other. It is therefore always possible to build homogeneous and even belt layers irrespective of the fitting diameter of the tyre to be built, of the inclination angle of the strip-like elements and of the length thereof in the circumferential direction.

In preferred embodiments of the present invention, depositing said strip-like elements on said first conveyor belt comprises exerting a magnetic attraction force on said strip-like elements by said first conveyor belt.

Preferably, depositing said strip-like elements on said at least one second conveyor belt comprises exerting a magnetic attraction force on said strip-like elements by said at least one second conveyor belt.

In this way it is possible to ensure a steady positioning of the strip-like elements on the respective conveyor belt, to the advantage of the quality and homogeneity of the belt layer that will be formed by said strip-like elements.

In preferred embodiments of the present invention, transferring said strip-like elements from said first conveyor belt and from said at least one second conveyor belt, respectively, to said first forming support comprises exerting a magnetic attraction force on said strip-like elements by said first forming support. Advantageously, such a provision allows achieving a steady positioning of the strip-like elements on said first forming support, to the advantage of the quality and homogeneity of the belt structure being built.

Preferably, the magnetic attraction force exerted on said strip-like elements by said first forming support is greater than the magnetic attraction force exerted on said strip-like elements by said first conveyor belt.

Preferably, the magnetic attraction force exerted on said strip-like elements by said first forming support is greater than the magnetic attraction force exerted on said strip-like elements by said at least one second conveyor belt.

In this way, an effective transfer of the strip-like elements from the respective conveyor belt to the first forming support is obtained, with consequent advantages in terms of both time and accuracy of the strip-like element position.

Preferably, transferring said strip-like elements from said first conveyor belt to said first forming support comprises rotating said first forming support with a peripheral speed equal to the advancement speed of said first conveyor belt.

Preferably, transferring said strip-like elements respectively from said at least one second conveyor belt to said first forming support comprises rotating said first forming support with a peripheral speed equal to the advancement speed of said at least one second conveyor belt.

Advantageously, such a provision ensures the effective transfer of the strip-like elements from the respective conveyor belt to the first forming support.

In the preferred embodiments of the present invention, building said belt structure further comprises:
- feeding a first reinforced band-like element up to a respective cutting member arranged close to said first conveyor belt;
- repeatedly cutting to size said first reinforced band-like element for forming said strip-like element;
- sequentially transferring each of said strip-like elements on said first conveyor belt.

In the preferred embodiments of the present invention, building said belt structure further comprises:
- feeding at least one second reinforced band-like element up to a respective cutting member arranged close to said at least one second conveyor belt;
- repeatedly cutting to size said at least one second reinforced band-like element for forming said strip-like elements;
- sequentially transferring each of said strip-like elements on said at least one second conveyor belt.

Preferably, feeding said at least one second reinforced band-like element up to said at least one second conveyor belt is at least partially carried out simultaneously with at least part of depositing said strip-like elements on said first conveyor belt. It is therefore possible to achieve a further substantial reduction of the overall time needed for building the belt structure.

Preferably, sequentially transferring each of said strip-like elements on the first conveyor belt comprises exerting a magnetic attraction force on said strip-like elements by a respective gripping member.

Preferably, sequentially transferring each of said strip-like elements on said at least one second conveyor belt comprises exerting a magnetic attraction force on said strip-like elements by a respective gripping member.

Advantageously, it is possible in this way to obtain a steady and effective grip of the strip-like elements during the transfer thereof and up to the time of deposition on the respective conveyor belt.

Preferably, the magnetic attraction force exerted on said strip-like elements by said first conveyor belt is greater than the magnetic attraction force exerted on said strip-like elements by said respective gripping member.

Preferably, the magnetic attraction force exerted on said strip-like elements by said at least one second conveyor belt is stronger than the magnetic attraction force exerted on said strip-like elements by said respective gripping member.

In this way, an effective transfer of the strip-like elements from the gripping member to the respective conveyor belt is obtained, with consequent advantages in terms of both time and accuracy of the strip-like element position.

Preferably, building said belt structure further comprises, after transferring said strip-like elements from said first conveyor belt to said first forming support, pressing said strip-like elements against said first forming support.

Preferably, building said belt structure further comprises, after transferring said strip-like elements from said at least one second conveyor belt to said first forming support, pressing said strip-like elements against said first forming support.

Advantageously, a compacting effect of the strip-like elements on the first forming support is thus achieved, obtaining the desired strengthening of the first belt layer on the first forming support and of the second belt layer on the first belt layer.

Preferably, transferring said strip-like elements on said first forming support from said first conveyor belt only begins when said strip-like elements reach a position wherein they are in contact with said first forming support and with said first conveyor belt.

Preferably, the transferring said strip-like elements on said first forming support from said at least one second conveyor belt only begins when said strip-like elements reach a position wherein they are in contact with said first forming support and with said at least one second conveyor belt.

Advantageously, such a provision ensures the correct transfer of the strip-like elements from the respective conveyor belt to the first forming support and accordingly, the correct positioning of the strip-like elements on the first forming support. In fact, the strip-like elements come into contact with the first forming support while they are still steadily positioned on the respective conveyor belt, thereby preventing the correct position of the strip-like elements being lost during the transfer from the conveyor belt to the first forming support.

Preferably, building said belt structure further comprises, after depositing said strip-like elements on said first conveyor belt and before transferring said strip-like elements from said first conveyor belt to said first forming support, depositing a pair of elongated elements made of elastomeric material on said first conveyor belt in such position as to be each partly overlapped to a respective end portion of said strip-like elements.

Advantageously, said elongated elements will form the under-belt inserts typically provided in some types of tyres. Even more advantageously, the deposition of said elongated elements on the conveyor belt allows keeping the free ends of the strip-like elements in contact with the surface of the respective conveyor belt. Such free ends would otherwise tend to raise by the effect of the internal tensions in the metal cords provided therein, with the risk of thereafter taking a wrong orientation on the first forming support and thereby, on the tyre being built.

As an alternative, the elongated elements may be directly deposited on the first forming support before the strip-like elements deposited on the first conveyor belt are transferred thereon.

In first embodiments of the present invention, building said belt structure comprises, before transferring said strip-like elements from said first conveyor belt to said first forming support, setting said first forming support to a first working diameter and, after transferring said strip-like elements from said at least one second conveyor belt to said first forming support, radially expanding said first forming support up to a second working diameter greater than said first working diameter while keeping a predetermined axial bending profile. The desired shape of the belt structure is thus obtained.

In alternative embodiments of the present invention, building said belt structure comprises, before transferring said strip-like elements from said first conveyor belt to said first forming support, setting said first forming support with a first axial bending profile and, after transferring said strip-like elements from said at least one second conveyor belt to said first forming support, shaping said first forming support with a second axial bending profile different from said first axial bending profile. The desired shape of the belt structure is thus obtained irrespective of the bending profile taken upon the transfer of the strip-like elements from the conveyor belts.

Preferably, building said belt structure comprises, once the movement of said first forming support towards said at least one second conveyor belt has begun, moving a further forming support up to said first conveyor belt. Advantageously, such device allows having a forming support at a conveyor belt since another forming support moves away from said conveyor belt after having received the strip-like elements thereby. An advantageous reduction of the process and setup time is thus obtained.

Preferably, said strip-like elements have a crosswise dimension comprised between about 10 mm and about 60 mm, even more preferably between about 20 mm and about 50 mm. The Applicant has noted that said dimensions are optimal for achieving a right compromise between deposition speed and deposition precision of the strip-like elements.

Preferably, said first moving device comprises a gripping unit for said first forming support, said gripping unit being movable along a first substantially horizontal direction and along a second substantially vertical direction.

Advantageously, the horizontal and vertical movement of the gripping unit allows the first forming support to be positioned at each of the conveyor belts in the most suitable position for allowing the correct transfer of the strip-like elements from the conveyor belt to the first forming support.

Preferably, the crown structure building line further comprises a handling device movable between a pick up position of said first forming support from a storage station and an operating position where said first forming support is transferred to said moving device.

Preferably, each of said first deposition apparatus and at least one second deposition apparatus comprises a respective gripping member of said strip-like elements, said respective gripping member being movable between a first operating position where said strip-like elements is picked up and a second operating position where said strip-like elements are deposited on said first conveyor belt and on said at least one second conveyor belt, respectively.

In preferred embodiments of the present invention, said gripping member comprises at least one retaining element of said strip-like elements.

Preferably, said retaining element comprises at least one magnetic element or device. Advantageously, said magnetic element retains the strip-like elements during the movement thereof towards the respective conveyor belt and up to the time of deposition thereof on such conveyor belt.

Preferably, said gripping member comprises a support element of said strip-like elements. Advantageously, the support element supports the strip-like elements on the opposite side with respect to the retaining element and cooperates with the latter during the movement of the strip-like elements towards the respective conveyor belt.

Preferably, said retaining element and said support element are movable in rotation with respect to a pivoting axis. In this way it is possible to carry out both the gripping of the individual strip-like elements and the release of the same on the respective conveyor belt.

In the preferred embodiments of the present invention, said first conveyor belt comprises, at at least one respective surface portion, at least one respective magnetic element or device.

In the preferred embodiments of the present invention, said at least one second conveyor belt comprises, at at least one respective surface portion, at least one respective magnetic element or device.

Said magnetic elements may be distributed, preferably evenly, underneath the whole surface of the respective conveyor belt or only at the surface portion whereon the strip-like elements are deposited.

In the preferred embodiments of the present invention, said magnetic elements comprise electromagnets, but permanent magnets may alternatively be used.

In some embodiments of the present invention, said magnetic elements comprise, at a first conveyor belt portion distal from the first forming support, a plurality of permanent magnets and at a second conveyor belt portion proximal to the first forming support, a plurality of electromagnets, or vice versa.

Preferably, said first forming support comprises, at at least one surface portion thereof, at least one magnetic element or device. In the preferred embodiments of the present invention, said magnetic elements comprise permanent magnets, but electromagnets may alternatively be used.

Irrespective of the specific type of magnetic elements used on the conveyor belts and/or on the first forming support, said magnetic elements advantageously allow a steady positioning of the strip-like elements on the respective conveyor belt and/or on the first forming support to be obtained.

In preferred embodiments of the present invention, the crown structure building line further comprises:
- a first apparatus for feeding a first reinforced band-like element close to said first conveyor belt;
- a first cutting member of said first reinforced band-like element.

The strip-like elements that will form the first belt layer can thus be obtained.

Preferably, the crown structure building line further comprises:
- at least one second apparatus for feeding at least one second reinforced band-like element close to said at least one second conveyor belt;
- at least one second cutting member of said at least one second reinforced band-like element.

The strip-like elements that will form the second belt layer can thus be obtained.

Preferably, the crown structure building line further comprises at least one first pressing member associated with said first conveyor belt and adapted to act in thrust against said first forming support when said first forming support is in said first operating position. Such pressing member carries out the compacting action on the first forming support of the strip-like elements forming the first belt layer.

Preferably, the crown structure building line further comprises at least one second pressing member associated with said at least one second conveyor belt and adapted to act in thrust against said first forming support when said first forming support is in said at least one second operating position. Such pressing member carries out the compacting action on the first forming support of the strip-like elements forming the second belt layer.

Preferably, said first pressing member and at least one second pressing member are associated to said first conveyor belt and to said at least one second conveyor belt, respectively, at a belt portion arranged, with reference to the advancement direction of said strip-like elements, downstream of said first forming support when said first forming support is in said first operating position and in said at least one second operating position, respectively.

Preferably, at least one first contrast roller acts against said first conveyor belt.

Preferably, at least one second contrast roller acting against said at least one second conveyor belt is provided.

Preferably, said at least one first contrast roller is associated with said first conveyor belt at a belt portion arranged, with reference to the advancement direction of said strip-like elements, upstream of said first forming support when said first forming support is in said first operating position.

Preferably, said at least one second contrast roller is associated with said at least one second conveyor belt at a belt portion arranged, with reference to the advancement direction of said strip-like elements, upstream of said first forming support when said first forming support is in said at least one second operating position.

Advantageously, said contrast rollers retain the strip-like elements on the respective conveyor belts, preventing them from moving by the effect of the magnetic force exerted by the first forming support, prior to reaching the position deemed optimal for the transfer to the conveyor belt.

In said first operating position said first forming support is arranged above said first conveyor belt at such a height as to come into contact with said strip-like elements deposited on said first conveyor belt.

In said at least one second operating position said first forming support is arranged above said at least one second conveyor belt at such a height as to come into contact with said strip-like elements deposited on said at least one second conveyor belt.

Advantageously, the optimal transfer position of the strip-like elements from each conveyor belt to the first forming support is thereby defined.

In first embodiments of the present invention, the crown structure building line further comprises a deposition apparatus for depositing a pair of elongated elements made of elastomeric material on said first forming support. By said apparatus it is possible to provide for depositing said under-belt inserts directly on the first forming support.

In alternative embodiments of the present invention, the crown structure building line further comprises a deposition apparatus for depositing a pair of elongated elements made of elastomeric material on said first conveyor belt. By said apparatus it is advantageously possible to provide for depositing the aforementioned under-belt inserts on the first conveyor belt to then transfer such under-belt inserts, along with the strip-like elements, to the first forming support.

Preferably, said deposition apparatus comprises a pair of feeding reels arranged above said first conveyor belt.

Preferably, each feeding reel is rotatable about a respective axis with a peripheral speed equal to the advancement speed of said first conveyor belt. Such a provision allows the deposition of the under-belt inserts on the free ends of the strip-like elements before they are transferred to the first forming support.

In first embodiments of the present invention, said first forming support has a predetermined axial bending profile.

In alternative embodiments of the present invention, said first forming support has a variable axial bending profile. Such forming support can advantageously be shaped with the desired bending profile irrespective of the bending profile taken upon the transfer of the strip-like elements from the conveyor belts.

Preferably, the crown structure building line further comprises:
- a further forming support;
- a further device for moving said further forming support between said first operating position and said at least one second operating position;
- a further handling device movable between said storage station and an operating position where said further forming support is transferred to said further moving device.

Preferably, said handling device comprises a robot arm.

Further features and advantages of the present invention will appear more clearly from the following detailed description of preferred embodiments thereof, made with reference to the attached drawings. In such drawings:
- figure 1 shows a schematic layout of a plant for building tyres for vehicle wheels wherein a process according to a preferred embodiment of the present invention is carried out;
- figure 2 is a schematic top view of a portion of the plant of figure 1 in a possible stand-by position;
- figure 3 is a schematic side view of the portion of plant of figure 2 in an operating configuration thereof;
- figures 4a to 4d show the portion of plant of figure 2 in subsequent operating configurations, seen from above;
- figure 5 is a schematic side view of a detail of the portion of plant of figure 2 in an operating configuration thereof;
- figure 6 shows a schematic perspective view of a technical detail of an alternative embodiment of a plant for building tyres for vehicle wheels according to the present invention;
- figure 7 is a schematic perspective view of a further technical detail of the plant embodiment of figure 6.

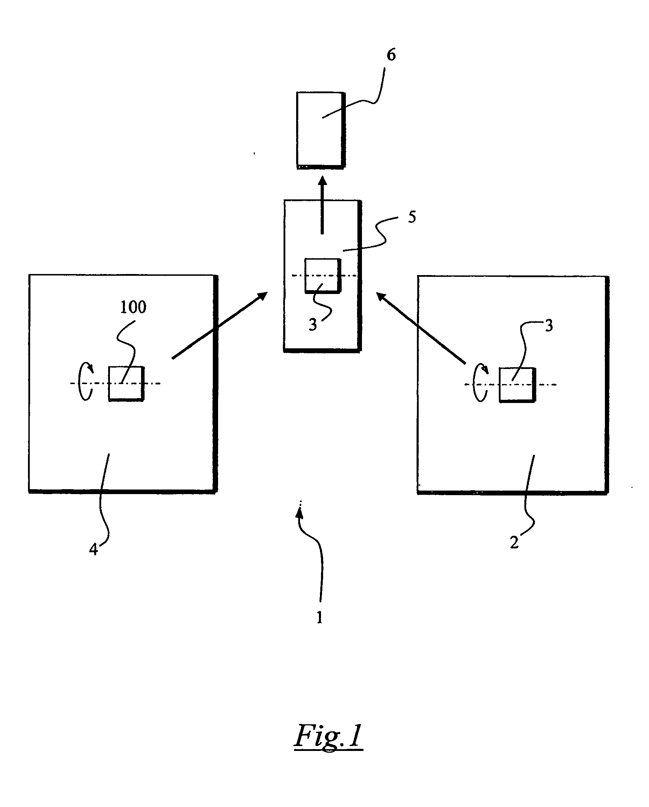

With reference to figure 1, reference numeral 1 globally indicates a plant for building tyres for vehicle wheels according to a preferred embodiment of the present invention. Such plant allows carrying out a preferred embodiment of a process for building tyres according to the present invention.

Plant 1 comprises a crown structure building line 4 using at least one first forming support 100 and a carcass structure building line 2 using at least one second forming support 3.

The crown structure building line 4 comprises a plurality of workstations (not shown), as well as at least one second handling device (not shown either) adapted to transfer the first forming support 100 with the relative crown structure being formed associated therewith from a first workstation to another workstation of said plurality of workstations.

The carcass structure building line 2 comprises a plurality of workstations (not shown), as well as at least one third handling device (not shown either) adapted to transfer the second forming support 3 with the relative carcass structure being formed associated therewith from a first workstation to another workstation of said plurality of workstations.

Plant 1 further comprises an assembling station 5 where the crown structure built in the crown structure building line 4 is associated, preferably on the second forming support 3, in a radially outer position with respect to the carcass structure built in the carcass structure building line 2.

Said carcass structure building line 2, crown structure building line 4 and assembling station 5 for example are of the type described in document WO2010/070374 by the same Applicant.

Plant 1 further comprises a vulcanization line 6 where the tyre assembled in the assembling station 5 is sent for carrying out a moulding and vulcanization process adapted to define the tyre structure according to desired tread pattern and geometry.

Plant 1 may further comprise a line for preparing elementary components which are adapted to be fed in the carcass structure building line 2 and/or in the crown structure building line 4 through proper elementary component feeding stations, as described for example in said document WO2010/070374.

Devices for adjusting the dimensions of the second forming support 3 and/or of the first forming support 100 may further be provided in the plant 1.

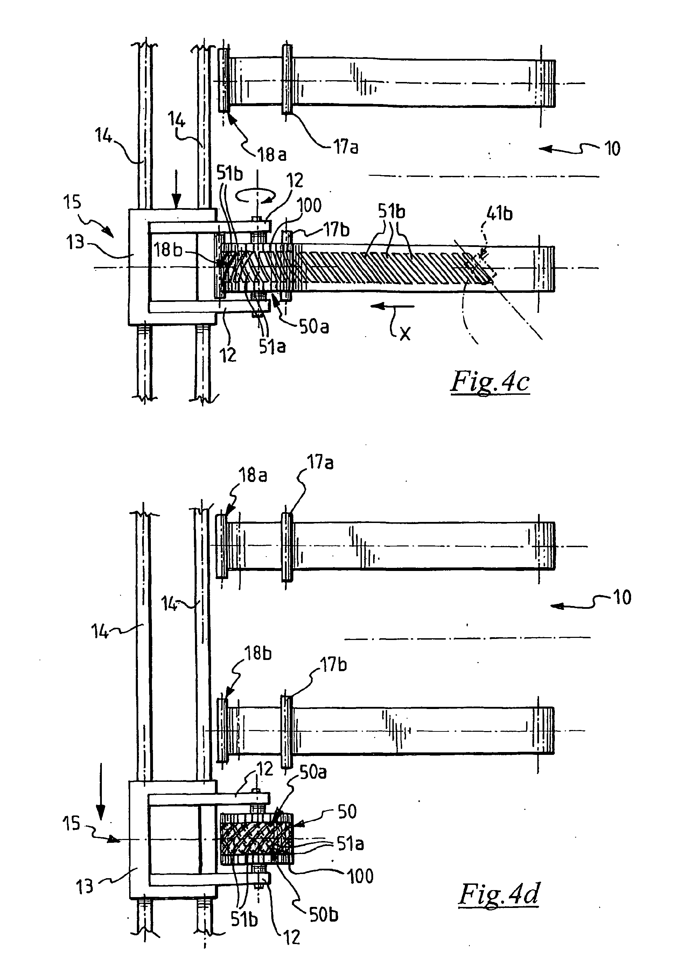

The crown structure to be built on the first forming support 100 (or on any semi-finished products previously deposited on such forming support) in the crown structure building line 4 comprises a belt structure 50 (figure 4d) defined by a first belt layer 50a and a second belt layer 50b arranged in a radially outer position with respect to the first belt layer 50a.

The first belt layer 50a comprises a predetermined number of strip-like elements 51a arranged in a sequence along the circumferential direction at a predetermined distance from each other, each strip-like element 51a being longitudinally oriented preferably along a direction inclined by a predetermined first angle with respect to the circumferential direction (figure 4c). For clarity of illustration, in the attached drawings the reference numeral 51a is associated to only some of the strip-like elements which are shown.

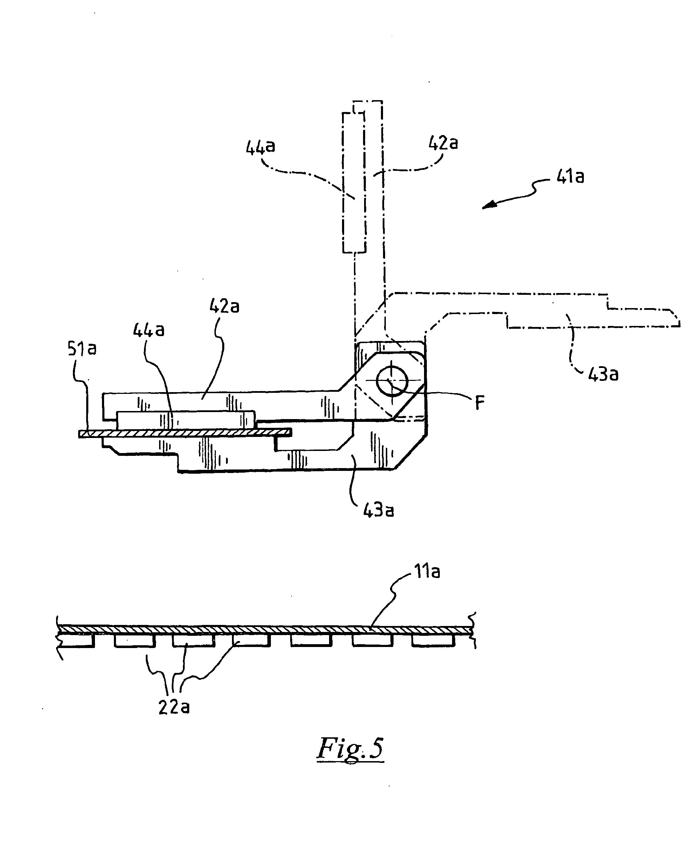

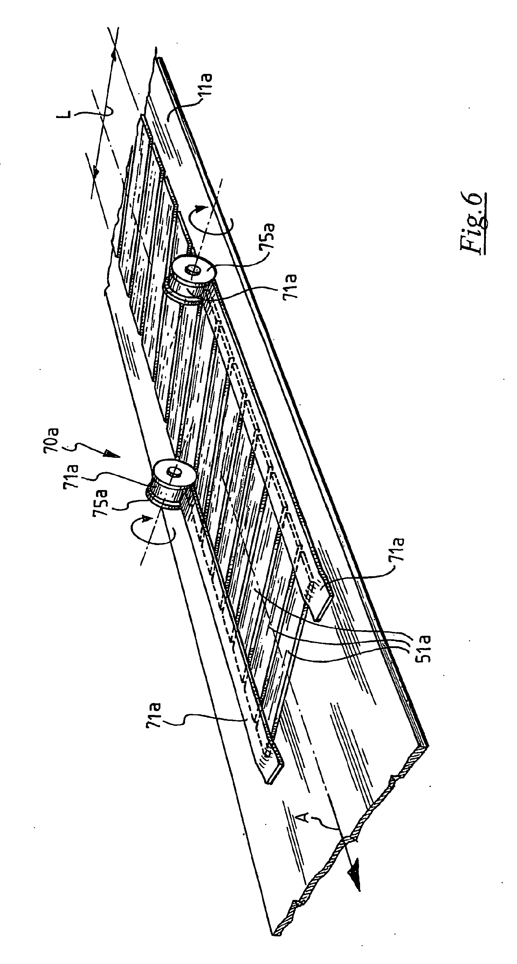

Preferably, the strip-like elements 51a have a crosswise dimension (or width) L comprised between about 10 mm and about 60 mm, even more preferably between about 20 mm and about 50 mm (figures 5 and 6).

Likewise, the belt layer 50b comprises a predetermined number of strip-like elements 51b arranged in a sequence along the circumferential direction at a predetermined distance from each other, each strip-like element 51b being longitudinally oriented preferably along a direction inclined by a predetermined second angle with respect to the circumferential direction. Said second angle is preferably opposite said first angle so as to define a belt structure 50 wherein, with reference to an equatorial plane of said first forming support 100 (in this case any plane containing the rotation axis of the first forming support 100), the strip-like elements 51b of the belt layer 50b are symmetrically arranged with respect to the strip-like elements 51a of the belt layer 50a. In other words, a belt structure 50 is obtained with strip-like elements 51a, 51b arranged according to an overall crossed orientation (figures 4c and 4d). For clarity of illustration, in the attached drawings the reference numeral 51b is associated to only some of the strip-like elements shown.

The strip-like elements 51b preferably have the same dimensions and shape as the strip-like elements 51a.

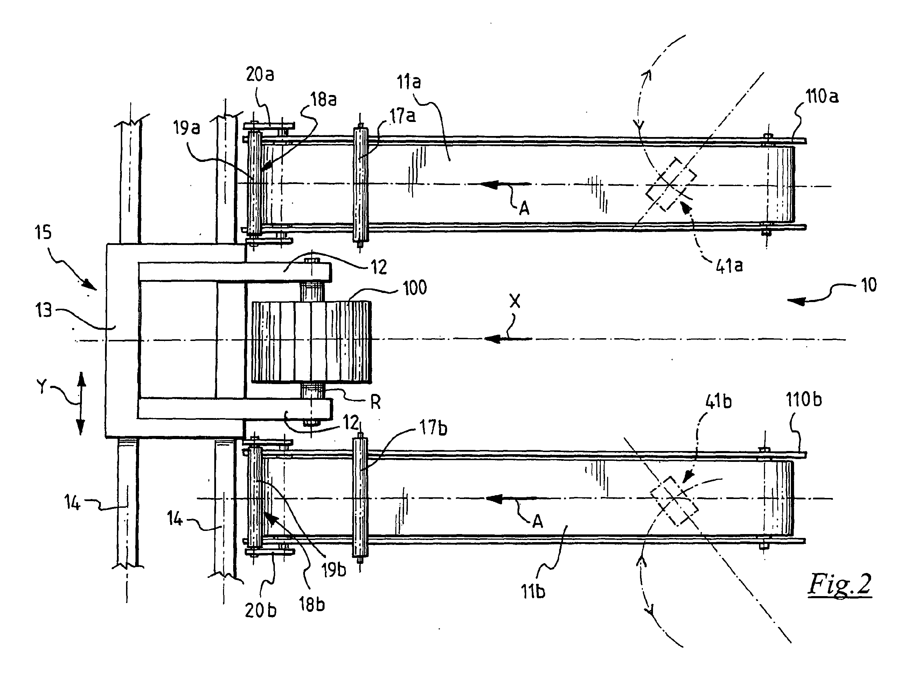

As shown in detail in figure 2, the crown structure building line 4 comprises a station 10 wherein the belt structure 50 described above is built.

Such station 10 comprises a first conveyor belt 11a oriented parallel to a direction x and a second conveyor belt 11b arranged parallel to the first conveyor belt 11a. As better described hereinafter, the conveyor belts 11a, 11b are intended to receive the strip-like elements 51a, 51b, respectively, to then transfer them to the first forming support 100, so as to form on the first forming support 100 the belt layers 50a, 50b and thus the belt structure 50.

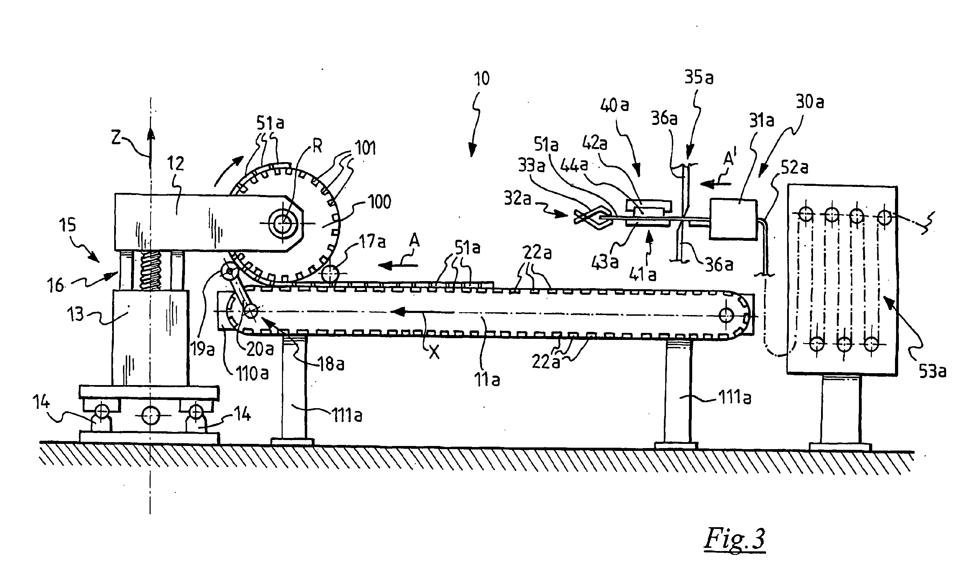

Each conveyor belt 11a, 11b comprises a respective support frame 110a, 110b associated to the ground by a pair of crosspieces. Figure 3 shows the crosspieces of conveyor belt 11a: such crosspieces are indicated with 111a.

The first forming support 100 is rotatably mounted, at the rotation axis R thereof, on a pair of opposite arms 12 of a proper gripping unit which, in the embodiment illustrated herein, comprises a carriage 13 slidingly associated with a pair of sliding guides 14 integral with the ground. The sliding guides 14 are oriented along a direction y perpendicular to direction x.

The assembly consisting of arms 12 and carriage 13 defines a first moving device 15 of the first forming support 100. Such first moving device 15, in operation, moves the first forming support 100 between a first operating position wherein the latter is positioned at the conveyor belt 11a

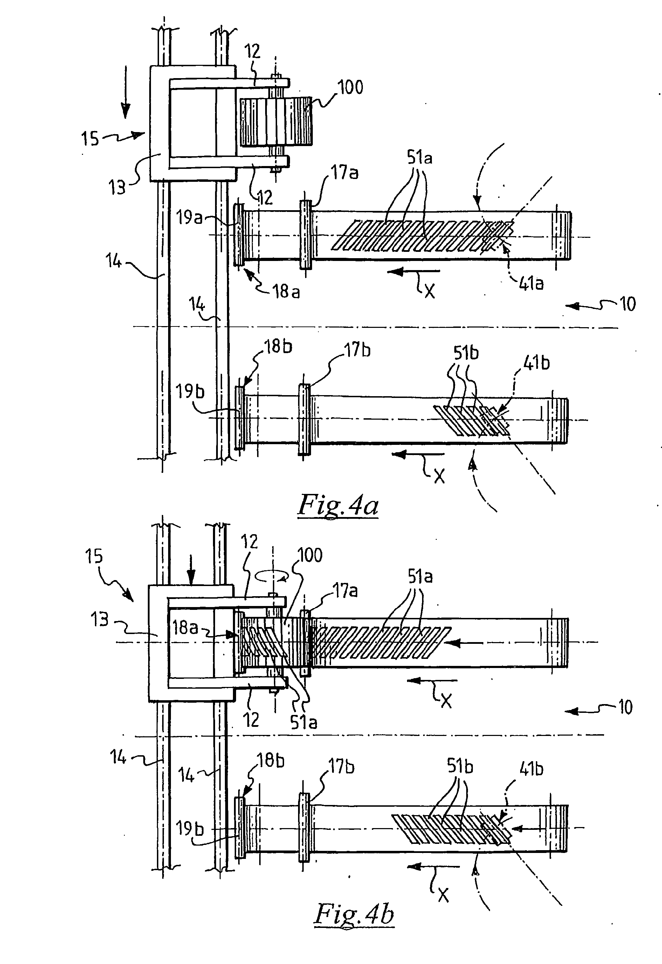

(figure 3 and 4b) and a second operating position wherein it is positioned at the conveyor belt 11b (figure 4c).

As shown in figure 3, arms 12 are movable relative to carriage 13 along a direction z perpendicular to directions x and y. Such movement occurs by the effect of the thrust action exerted by a lifting member 16 operatively interposed between arms 12 and carriage 13.

The first forming support 100 can thus rotate about the rotation axis R and shift along two horizontal directions x, y perpendicular to each other and a vertical direction z.

In particular, the vertical shifting allows the first forming support 100 to be positioned above the conveyor belts 11a, 11b tangent to the strip-like elements 51a, 51b previously deposited on such conveyor belts. In this way, the strip-like elements 51a, 51b come into contact with the first forming support 100 when they are still in contact with the upper surface of the conveyor belt 11a, 11b.

The first forming support 100 is preferably radially expandable/contractible for allowing belt structures 50 of different diameter to be built. In the embodiment shown herein, the first forming support 100 has a predetermined axial bending profile, in particular a cylindrical profile in the case illustrated herein.

In an alternative embodiment (not shown), the first forming support 100 has a variable axial bending profile, thus being able to take a shape different from the cylindrical one.

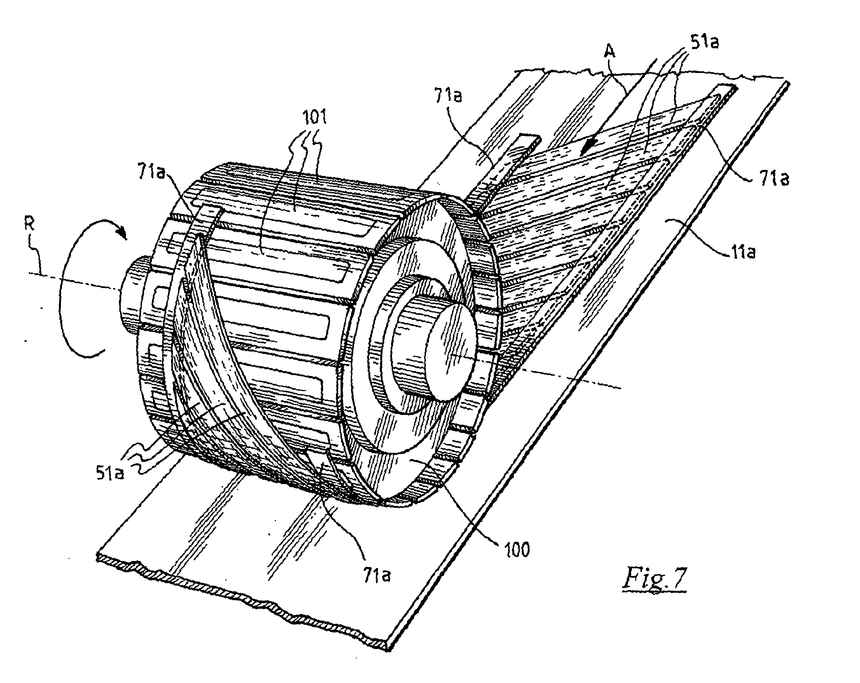

As schematically shown in figure 3 and in figure 7, the first forming support 100 comprises a plurality of magnetic elements or devices 101 arranged in a sequence along the circumferential direction and preferably equally spaced apart from each other.

For clarity of illustration, in the attached drawings the reference numeral 101 is associated to only some of said magnetic elements/devices.

Preferably, the magnetic elements 101 are distributed along the whole circumferential surface of the first forming support 100 and are defined by permanent magnets having an axial extension at least equal or close to the width of the strip-like elements 51a.

The building station 10 further comprises a handling device (for example a robot arm, not shown in the attached drawings) adapted to pick up said first forming support 100 from a storage station for moving it at the first moving device 15 and transferring it to the latter.

With reference to figures 2 and 3, each conveyor belt 11a, 11b comprises, at an end portion thereof proximal to the first forming support 100, a respective contrast roller 17a, 17b and, downstream of said contrast roller 17a, 17b with reference to the advancement direction A of the conveyor belts 11a, 11b, a respective pressing member 18a, 18b.

Each contrast roller 17a, 17b is positioned above the conveyor belt 11a, 11b with reference to direction z and is associated with the respective conveyor belt 11a, 11b at a respective belt portion that, when the first forming support 100 is located at the respective conveyor belt 11a, 11b, is upstream of said first forming support 100, with reference to the advancement direction A of the conveyor belt 11a, 11b. In operation, each contrast roller 17a, 17b retains each of the respective strip-like elements 51a, 51b against the upper surface of the respective conveyor belt 11a, 11b.

Each pressing member 18a, 18b is positioned above the conveyor belt 11a, 11b with reference to direction z and is associated with the respective conveyor belt 11a, 11b at a respective belt portion that, when the first forming support 100 is arranged at the respective conveyor belt 11a, 11b, is downstream of said first forming support 100, with reference to the advancement direction A of the conveyor belt 11a, 11b. In operation, the pressing member 18a, 18b acts pushing against the first forming support 100, as clearly shown in figure 3. To this end, each pressing member 18a, 18b is, in the specific embodiment shown herein, defined by a roller 19a, 19b rotatably associated with a pair of arms 20a, 20b in turn rotatably associated with the support frame 110a, 110b of the conveyor belt 11a, 11b through the interposition of a proper elastic thrust element (not shown).

What said in the present description with reference to the conveyor belt 11a applies likewise to the conveyor belt 11b, unless expressly stated otherwise.

With reference again to figure 3, the conveyor belt 11a comprises a plurality of magnetic elements or devices 22a arranged in a sequence along direction x and preferably equally spaced apart from each other.

For clarity of illustration, in the attached drawings the reference numeral 22a is associated to only some of said magnetic elements/devices.

The magnetic elements 22a are preferably distributed along the whole surface of the conveyor belt 11a.

Preferably, said magnetic elements 22a are defined by electromagnets.

Said magnetic elements 22a of the conveyor belt 11a and the magnetic elements 101 of the first forming support 100 are selected or set so that the magnetic attraction force exerted on the strip-like elements 51a by the magnetic elements 22a is lower than the one exerted by the magnetic elements 101. This is in order to allow the passage of the strip-like elements 51a by magnetic attraction from the conveyor belt 11a to the first forming support 100.

Due to the presence of the contrast roller 17a, such passage takes place after each strip-like element 51a has gone beyond said contrast roller 17a in the movement thereof along direction A.

As an alternative (solution not shown in the figures), the magnetic elements/devices (or electromagnets) may be permanent, positioned underneath the conveyor belt 11a.

In such alternative, it is particularly advantageous for the magnetic element positioned underneath the conveyor belt 11a at a deposition zone of the strip-like elements 51a to have a high attraction force.

With the strip-like elements 51a already positioned on the conveyor belt 11a, the magnetic elements positioned downstream only have to keep the strip-like element 51a in position and therefore they will have a minimum attraction force, so that when the strip-like elements 51a contact the first forming support 100 they can be easily transferred from the conveyor belt 11a to the first forming support 100.

As shown in figure 3, the building station 10 comprises a deposition apparatus 30a of the strip-like elements 51a on the conveyor belt 11a. A similar deposition apparatus (not shown) is provided for depositing the strip-like elements 51b on the conveyor belt 11b.

As better described hereinafter, the strip-like elements 51a are obtained by repeatedly cutting to size a reinforced band-like element 52a suitably fed at the conveyor belt 11a. Likewise, the strip-like elements 51b are obtained by repeatedly cutting to size a reinforced band-like element (not shown) suitably fed at the conveyor belt 11b.

Said reinforced band-like elements preferably have the same width and thickness. Preferably, each of them comprises at least two reinforcing cords (not shown) of metal material embedded in a matrix of elastomeric material. Such reinforcing cords 6 extend parallel to each other along the direction of longitudinal extension of the respective reinforced band-like element.

The assembly of devices adapted to form the strip-like elements 51a and to deposit the strip-like elements on the conveyor belt 11a is described in detail hereinafter. A similar assembly of devices is provided at the conveyor belt 11b for forming the strip-like elements 51b and for depositing the strip-like elements on the conveyor belt 11b.

With reference to figure 3, the reinforced band-like element 52a is gathered in a festoon 53a and is fed towards the conveyor belt 11a along a feeding direction A' through a proper feeding apparatus 30a arranged, with reference to the feeding direction A', downstream of festoon 53a.

Upstream of festoon 53a, with reference again to the feeding direction A' of the reinforced band-like element 52a, the building station 10 preferably comprises a device for the in-line preparation of the reinforced band-like element 52a, such as for example a drawing and/or calendering device (not shown). As an alternative, the reinforced band-like element 52a is unwound from a reel; advantageously, with this solution it is possible to feed the conveyor belts 11a and 11b in parallel.

Preferably, a motor unit (not shown) controls the storage of the reinforced band-like element 52a in festoon 53a so as to ensure a predetermined filling speed of the latter; such speed is selected according to the average pick-up speed of the reinforced band-like element 52a from festoon 53a.

The feeding apparatus 30a preferably comprises an advancement unit 31a of the reinforced band-like element 52a and a pulling device 32a. The advancement unit 31a is adapted to pick up a portion of reinforced band-like element 52a from festoon 53a whereas the pulling device 32a is adapted to pull the reinforced band-like element 52a from the advancement unit 31a with a predetermined advancement pitch.

In the specific embodiment illustrated herein, the pulling device 32a comprises a pneumatic clamp 33a adapted to grasp the head of the reinforced band-like element 52a in output from the advancement unit 31a and pull such head by the predetermined advancement pitch. Such advancement pitch defines the cutting length of the reinforced band-like element 52a, which corresponds to the width L of the strip-like elements 51a (figure 6). The cutting length is adjustable according to the diameter of the first forming support 100 and of the type of tyre to be built.

A cutting member 35a is provided between the advancement unit 31a and the clamp 33a. The cutting member 35a is adapted to carry out the sequential operations of cutting to size the reinforced band-like element 52a for obtaining a predetermined number of strip-like elements 51a in a sequence.

The cutting member 35a acts on the reinforced band-like element 52a with a predetermined cutting frequency along a cutting direction that, on the lying plane of the reinforced band-like element 52a, defines a predetermined cutting angle with the advancement direction A' of the reinforced band-like element 52a.

In the preferred embodiments of the present invention, the cutting angle is set to a value greater than zero, preferably comprised between about 15° and about 90°, more preferably between about 18° and about 50°.

The cutting member 35a preferably comprises a pair of blades 36a, respectively upper and lower, intended to be moved towards each other.

The cutting member 35a may rotate as a whole about a rotation axis thereof for allowing the reinforced band-like element 52a to be cut with different angles.

The cutting member 35a may further be positioned at a variable distance with respect to the advancement unit 31a, depending on the length of the portion of reinforced band-like element 52a to be cut.

A scrap discard unit (not shown) is provided at the cutting member 35a. Such discard unit has the task of removing the scraps of reinforced band-like element 52a resulting from the change of the cutting angle and from any non conforming portions of reinforced band-like element 52a, detected by sensors positioned upstream of the cutting member 35a, discharging it into a proper collecting container which is easily accessible to the operators. Said discard unit is integral with the cutting member 35a for allowing the scraps to be discharged at the same time as the setting of the cutting member 35a into position.

Downstream of the cutting member 35a, i.e. between the cutting member 35a and the conveyor belt 11a, an apparatus 40a for depositing on the conveyor belt 11a the strip-like elements 51a cut to size from the reinforced band-like element 52a is provided.

The deposition apparatus 40a comprises a gripping member 41a of the portion of reinforced band-like element 52a which, pulled by clamp 33a and arranged downstream of the cutting member 35a, defines the strip-like element 51a.

The gripping member 41a may be moved between a first operating position defined at the cutting member 35a and a second operating position defined at the conveyor belt 11a. In said first operating position, the gripping member 41a picks up the strip-like element 51a cut to size from the reinforced band-like element 52a; in said second operating position, the gripping member deposits the strip-like element 51a on the conveyor belt 11a.

A preferred embodiment of the gripping member 41a is better shown in figure 5.

Preferably, the gripping member 41a comprises a retaining element 42a of the strip-like element 51a and a support element 43a of the strip-like element 51a.

The retaining element 42a preferably comprises a magnetic element 44a (preferably a permanent magnet or, as an alternative, an electromagnet) intended to act on the upper surface of each of the strip-like elements 51a for steadily retaining the latter during the movement thereof between said first operating position and said second operating position and prior to the deposition thereof on the conveyor belt 11a. Said retaining takes place by the effect of the magnetic attraction force exerted on the metal cords of the strip-like elements 51a by said magnetic element 44a.

The magnetic element 44a is selected or set so that the magnetic attraction force exerted on the strip-like elements 51a by the magnetic element 44a is lower than the one exerted by the magnetic elements 22 of the conveyor belt 11a, so as to allow the passage of the strip-like elements 51a by magnetic attraction from the retaining element 42a to the conveyor belt 11a.

The support element 43a, on the other hand, acts on the lower surface of the strip-like elements 51a and cooperates with the retaining element 42a during the movement of the strip-like element towards the conveyor belt 11a.

The retaining element 42a and the support element 43a are reciprocally pivoted at a pivoting axis F, so that each of them may rotate with respect to said axis F between a gripping position indicated in figure 5 with a solid line and a service position indicated in figure 5 with a dashed line.

Preferably, with reference to said gripping position, the retaining device 42a may rotate by an angle comprised between about 0° and about 90°, whereas the support device 43a may rotate by an angle comprised between about 0° and about 180°.

In operation, the retaining element 42a takes the gripping position during the movement of the strip-like elements 51a towards the conveyor belt 11a, whereas it takes the service position prior to the gripping of the strip-like elements 51a at the cutting member 35a and prior to the deposition of the strip-like elements 51a on the conveyor belt 11a.

A discard unit (not shown) of the strip-like elements 51a is provided at the gripping member 41a. This discard unit has the tasks of picking up from the gripping member 41a any strip-like elements 51a deemed as non suitable for being deposited on the conveyor belt 11a (and thus on the first forming support 100), and discharging them into proper containers which are easily accessible to the operators.

Said discard unit is controlled by a proper control device (not shown) according to a signal detected upstream of the cutting member 35a and representative of the instant thickness of the reinforced band-like element 52a. The discard unit starts to act when an undesired change in thickness is detected, due for example to an accumulation of elastomeric material.

In a specific embodiment of the present invention, illustrated in figures 6 and 7, the building station 10 also comprises an apparatus 70a for depositing an elongated element 71a, preferably of elastomeric material, on each of the end portions of the strip-like elements 51a already deposited on the conveyor belt 11a. Such elongated element 71a is intended to form the so-called under-belt insert in the tyre built.

Apparatus 70a operates in an intermediate portion of conveyor belt 11a between the one where the strip-like elements 51a are deposited and the one where the strip-like elements 51a are transferred on the first forming support 100.

Preferably, each elongated element 71a has a thickness comprised between about 0.5 mm and about 1.5 mm, more preferably equal to about 1 mm.

As shown in figures 6 and 7, each elongated element 71a is deposited on the respective end portion of the strip-like elements 51a so as to be partially arranged above the upper surface of the conveyor belt 11a. Once the strip-like elements 51a have been transferred on the first forming support 100, each elongated element 71a is then partially interposed between the surface of the first forming support 100 and the end portion of the strip-like elements 51a, as shown in figure 7.

In the specific embodiment of figure 6, apparatus 70a comprises a pair of reels 75a for feeding the elongated element arranged above the conveyor belt 11a in an offset position with respect to each other, such offset being determined by the cutting angle of the strip-like elements 51a. The relative position of the two reels 75a may be adjusted as the width of the strip-like elements 51a and the cutting angle vary.

Reels 75a are associated to a support element (not shown) which may be moved above the conveyor belt 11a towards/away from the conveyor belt 11a, so as to bring or not the elongated elements 71a in contact with the end portion of the strip-like elements 51a.

Reels 75a are controlled for rotating about the respective axis of rotation with a peripheral speed equal to the advancement speed of the conveyor belt 11a, thus feeding the elongated elements 71a on the end portions of the strip-like elements 51a and on the adjacent surface of conveyor belt 11a.

As an alternative, reels 75a may be arranged on axis and be actuated in rotation at different times, the time interval between the actuation of the two reels 75a being a function of the cutting angle of the strip-like elements 51a.

As an alternative, reels 75a may be moved with respect to the conveyor belt 11a in a direction opposite the advancement direction A and with a peripheral speed having an absolute value greater than the advancement speed of the conveyor belt 11a.

An alternative embodiment of the present invention is provided wherein the elongated elements 71a are directly deposited on the forming support 100 before the first belt layer 50a is built thereon.

In a specific embodiment of the present invention not shown, the building station 10 comprises a further forming support totally similar to the first forming support 100 described above. Such further forming support is intended to position at each conveyor belt 11a, 11b as soon as the first forming support 100 has moved away from such conveyor belt.

To this end, a further moving device totally similar to the first moving device 15 described above and a further handling device totally similar to the handling device described above are provided.

With reference to the attached figures, a preferred embodiment of the process for building a tyre for vehicle wheels according to the present invention shall now be described. Such process may be carried out with plant 1 described above.

With reference to figure 1, the process of the present invention comprises building the tyre carcass structure by moving the second forming support 3 among the plurality of workstations provided in the carcass structure building line 2 and building the tyre crown structure by moving the first forming support 100 among the plurality of workstations provided in the crown structure building line 4, for example according to what described in document WO2010/070374 by the same Applicant.

Thereafter, the carcass structure and the crown structure are sent to the assembly station 5, where the crown structure is transferred on the second forming support 3 in a radially outer position with respect to the carcass structure.

Building the crown structure comprises building of a belt structure 50 on the first forming support 100 and subsequently assembling a tread band in a radially outer position with respect to the belt structure 50.

The tyre thus assembled is then sent to the vulcanisation line 6 where the tyre takes its final shape, with the desired tread pattern.

Building the belt structure 50 comprises building of the first belt layer 50a on the first forming support 100 and building, again on the first forming support 100, the second belt layer 50b in a radially outer position with respect to said first belt layer 50a.

Building the first belt layer 50 at first comprises setting up plant 1 to a predetermined initial operating configuration selected according to the features of the tyre to be built.

Setting up plant 1 in particular comprises picking up the first forming support 100 from the respective storage station through the handling device described above and subsequently mounting the first forming support 100 on the first moving device 15.

Setting up plant 1 further comprises positioning the cutting member 35a at the desired cutting angle, setting up the first forming support 100 at a first working diameter and positioning of said first forming support 100 at a predetermined height from the ground according to said working diameter, to the height of the conveyor belts 11a and 11b and to the thickness of the strip-like elements 51a, 51b.

Thereafter, the first forming support 100 is moved by the first moving device 15 up at the first conveyor belt 11a. As shown in figure 3, simultaneously with said movement, feeding the reinforced band-like element 52a along the feeding direction A', sequentially cutting to size the reinforced band-like element 52 for forming the strip-like elements 51a and sequentially depositing such strip-like elements 51a on the conveyor belt 11a by the gripping member 41a occur simultaneously with the above movement.

Figure 4a also shows that the deposition of the strip-like elements 51b on the conveyor belt 11b begins simultaneously with the aforementioned operations. Such strip-like elements 51b are cut to size from a respective reinforced band-like element fed in the proximity of the conveyor belt 11b, in a way totally similar to what described and illustrated herein with reference to the strip-like elements 51a and to the first conveyor belt 11a.

As shown in figure 2, the deposition of the strip-like elements 51a on the conveyor belt 11a requires the head of the reinforced band-like element 52a to be gripped by clamp 33a. Thereafter, clamp 33a pulls the head of the reinforced band-like element 52a by the predetermined advance pitch along the feeding direction A'. Meanwhile, blades 36a of the cutting member 34a are in open position and the retaining element 42a of the gripping member 41a is in the position shown with a dashed line in figure 5.

When clamp 33a has moved the head of the reinforced band-like element 52a by said predetermined advance pitch, the gripping member 41a and the cutting member 35a move to the respective positions shown in figure 3.

With specific reference to the gripping member 41a, it moves to the gripping configuration well shown with a solid line in figure 5. In such operating configuration, the strip-like element 51a is picked up and firmly retained by the effect of the magnetic attraction exerted on the strip-like element 51a by the magnetic element 44a.

At this point, the cutting of the reinforced band-like element 52a, the subsequent transfer of the strip-like element 51a thus formed on the first conveyor belt 11a through the movement of the gripping member 41a towards the conveyor belt 11a and the subsequent deposition of the strip-like element 51a on said conveyor belt 11a can take place.

Prior to the deposition of the strip-like element 51a on the conveyor belt 11a, the support element 43a moves to the position shown with a dashed line in figure 5 for allowing the subsequent release of the strip-like element 51a on the conveyor belt 11a. Such release takes place by the effect of the magnetic attraction exerted on the strip-like element 51a by the magnetic elements 22a of the conveyor belt 11a.

Meanwhile, the conveyor belt 11a is moved along direction x and the aforementioned operations of cutting to size and depositing the strip-like elements 51a are repeated a predetermined number of times so as to deposit a predetermined number of strip-like elements 51a on the conveyor belt 11a. Each strip-like element 51a is deposited at a predetermined distance with respect to the previously deposited strip-like element 51a, such distance having a value in the range between zero and a predetermined value and being selected according to the diameter of the forming support and to the predetermined number of strip-like elements 51a to be deposited.

The operations of cutting to size and sequentially depositing the strip-like elements 51b on the conveyor belt 11b are totally identical to those described above with reference to the strip-like elements 51a and to the conveyor belt 11a.

When the first forming support 100 is arranged at the conveyor belt 11a, it is controlled in rotation so that the peripheral speed thereof is equal to the advancement speed of the conveyor belt 11a.

As shown in figures 2 and 4b, the transfer on the first forming support 100 of each one of the strip-like elements 51a previously deposited on the conveyor belt 11a then begins. Such transfer takes place by the effect of the magnetic attraction exerted on each strip-like element 51a by the magnetic elements 101 of the first forming support 100 and takes place when each strip-like element 51a, having gone beyond the contrast roller 17a, is in contact with the surface of the first forming support 100.

During the transfer of the strip-like elements 51a from the conveyor belt 11a to the first forming support 100, the deposition of the strip-like elements 51b on the conveyor belt 11b continues, as shown in figure 4b.

Once the first strip-like element 51a has been transferred on the forming support 100, the pressing member 18a is activated for pressing said strip-like element 51a (and all the subsequent strip-like elements 51a) against the forming support 100.

Once the transfer of the strip-like elements 51a from the conveyor belt 11a to the first forming support 100 has been completed, and thus the building of the first belt layer 50a on the forming support 100 has been completed, the first moving device 15 is controlled for moving the first forming support 100 up to the conveyor belt 11b.

During such movement, the deposition of the strip-like elements 51b on the conveyor belt 11b continues, as shown in figure 4b and 4c.

With reference to figure 4c, once the first forming support 100 has reached the conveyor belt 11b, the transfer on said first forming support 100 of the strip-like elements 51b already deposited on the conveyor belt 11b takes place. Such transfer takes place with methods totally identical to those described above with reference to the strip-like elements 51a and to the conveyor belt 11a.

Also in this case, once the first strip-like element 51b has been transferred on the forming support 100, the pressing member 18b is activated for pressing said strip-like element 51b (and all the subsequent strip-like elements 51b) against the forming support 100.

As shown in figure 4d, once the transfer of the strip-like elements 51b from the conveyor belt 11b to the first forming support 100 has been completed, and thus the building of the second belt layer 50b on said first forming support 100 in a radially outer position with respect to the first belt layer 50a has been completed, the first moving device 15 is controlled for moving the first forming support 100 out of the building station 10.

The first forming support 100 can therefore be, if desired, radially expanded up to a second working diameter greater than said first working diameter, so as to obtain the desired shape of the belt structure 50.

If the first forming support 100 is of the type with variable profile, said first forming support 100 is initially set with a first axial bending profile and once the building of the first belt layer 50a and of the second belt layer 50b has been completed, it is shaped with a second axial bending profile different from said first axial bending profile.

With reference to figures 6 and 7, in one embodiment of the process of the present invention, before the strip-like elements 51a deposited on the conveyor belt 11a are transferred on said first forming support 100, an elongated element 71a is deposited at each one of the ends of the strip-like elements 51a deposited on the conveyor belt 11a. As already said, each elongated element 71a is deposited in such position as to partially overlap a respective end portion of said strip-like elements 51a.

To this end, the feeding reels 75a are moved in contact with the top surface of the end portions of the strip-like elements 51a and are controlled in rotation with a peripheral speed equal to the advancement speed of the conveyor belt 11a, thus feeding the elongated elements 71a on the end portions of the strip-like elements 51a and on the adjacent surface of conveyor belt 11a.

If the building station 10 comprises a further forming support totally identical to the first forming support 100 described above, the process of the present invention comprises, when the first forming support 100 moves towards the conveyor belt 11b after having received the strip-like elements 51a from the conveyor belt 11a, moving said further forming support to the conveyor belt 11a for proceeding with the building of a new belt structure. The process then continues in a way totally similar to what described above with reference to the first forming support 100 and to the strip-like elements 51a and 51b.

It is clear from the above description that since the process and the plant described above carry out a plurality of operations at the same time, they allow achieving an advantageous reduction of the overall time for making the belt structures of tyres for vehicle wheels.

Of course, a man skilled in the art may make further changes and variants to the invention described hereinbefore in order to meet specific and contingent needs, these changes and variants in any case falling within the scope of protection defined by the following claims.

## Claims

1. Process for building tyres for vehicle wheels, comprising:
- manufacturing a carcass structure;
- manufacturing a crown structure;
- associating the crown structure in a radially outer position with respect to the carcass structure;
wherein manufacturing a crown structure comprises building a belt structure (50a) on a first forming support (100); wherein building said belt structure (50a) comprises:
- sequentially depositing, on a first conveyor belt (11a), a predetermined number of strip-like elements (51a);
- sequentially depositing, on at least one second conveyor belt (11b), a predetermined number of strip-like elements (51b);
- transferring said strip-like elements (51a) from said first conveyor belt (11a) to said first forming support (100) so as to build a first belt layer (50a) on said first forming support (100);
- moving said first forming support (100) up to said at least one second conveyor belt (11b);
- transferring said strip-like elements (51b) from said at least one second conveyor belt (11b) to said first forming support (100) so as to build at least one second belt layer (50b) on said first forming support (100) in a radially outer position with respect to said first belt layer (50a); wherein transferring said strip-like elements (51a) from said first conveyor belt (11a) to said first forming support (100) is at least partially carried out simultaneously with at least part of depositing said strip-like elements (51b) on said at least one second conveyor belt (11b).

2. Process according to claim 1, wherein moving said first forming support (100) up to said at least one second conveyor belt (11b) is at least partially carried out simultaneously with at least part of depositing said strip-like elements (51b) on said at least one second conveyor belt (11b).

3. Process according to claim 1 or 2, wherein depositing said strip-like elements (51a) on said first conveyor belt (11a) is at least partially carried out simultaneously with at least part of depositing said strip-like elements (51b) on said at least one second conveyor belt (11b).

4. Process according to any one of the previous claims, wherein building said belt structure (50a) comprises, prior to transferring said strip-like elements from said first conveyor belt (11a) to said first forming support (100), moving said first forming support (100) up to said first conveyor belt (11a).

5. Process according to claim 4, wherein moving said first forming support (100) up to said first conveyor belt (11a) is at least partially carried out simultaneously with at least part of depositing said strip-like elements (51a) on said first conveyor belt (11a).

6. Process according to claim 4 or 5, wherein moving said first forming support (100) up to said first conveyor belt (11a) is at least partially carried out simultaneously with at least part of depositing said strip-like elements (51b) on said at least one second conveyor belt (11b).

7. Process according to any one of the previous claims, wherein transferring said strip-like elements (51a, 51b) from said first conveyor belt (11a) and from said at least one second conveyor belt (11b), respectively, to said first forming support (100) comprises exerting a magnetic attraction force on said strip-like elements (51a, 51b) by said first forming support (100).

8. Process according to any one of the previous claims, wherein building said belt structure (50) further comprises:
- feeding a first reinforced band-like element (52a) and at least one second reinforced band-like element up to at least a respective cutting member (35a) arranged close to said first conveyor belt (11a) and said at least one second conveyor belt (11b), respectively;
- repeatedly cutting to size said first reinforced band-like element (52a) and at least one second reinforced band-like element for forming said strip-like elements (51a, 51b) from said first reinforced band-like element (52a) and from said at least one second reinforced band-like element, respectively;
- sequentially transferring each of said strip-like elements (51a, 51b) on said first conveyor belt (11a) and on said at least one second conveyor belt (11b), respectively.

9. Process according to claim 8, wherein feeding said at least one second reinforced band-like element up to said at least one second conveyor belt (11b) is at least partially carried out simultaneously with at least part of depositing said strip-like elements (51a) on said first conveyor belt (11a).

10. Process according to claim 8 or 9, wherein sequentially transferring each of said strip-like elements (51a, 51b) on said first conveyor belt (11a) and on said at least one second conveyor belt (11b), respectively, comprises exerting on said strip-like elements (51a, 51b) a magnetic attraction force by a respective gripping member (41a).

11. Process according to any one of the previous claims, wherein transferring said strip-like elements (51a, 51b) on said first forming support (100) from said first conveyor belt (11a) and from said at least one second conveyor belt (11b), respectively, only begins when said strip-like elements (51a, 51b) reach a position wherein they are in contact with said first forming support (100) and with said first conveyor belt (11a) and said at least one second conveyor belt (11b), respectively.

12. Process according to any one of the previous claims, wherein building said belt structure (50) further comprises, after depositing said strip-like elements (51a) on said first conveyor belt (11a) and before transferring said strip-like elements (51a) from said first conveyor belt (11a) to said first forming support (100), depositing a pair of elongated elements (71a) made of elastomeric material on said first conveyor belt (11a) in such position as to be each partly overlapped to a respective end portion of said strip-like elements (51a).

13. Process according to any one of the previous claims, wherein building said belt structure (50) comprises, once the movement of said first forming support (100) towards said at least one second conveyor belt (11b) has begun, moving a further forming support up to said first conveyor belt (11a).

14. Plant (1) for building tyres for vehicle wheels, comprising:
- a carcass structure building line (2);
- a crown structure building line (4);
wherein the crown structure building line (4) comprises:
- a first conveyor belt (11a) oriented parallel to a direction x;
- at least one second conveyor belt (11b) arranged parallel to said first conveyor belt (11a);
- a first deposition apparatus (40a) of a predetermined number of strip-like elements (51a) on said first conveyor belt (11a);
- at least one second deposition apparatus of a predetermined number of strip-like elements (51b) on said at least one second conveyor belt (11b);
- a first forming support (100);
- a first moving device (15) for moving said first forming support (100), along a direction y, perpendicular to said direction x, between a first operating position wherein it is positioned at said first conveyor belt (11a) and at least one second operating position wherein it is positioned at said at least one second conveyor belt (11b); wherein in said first operating position and in said at least one second operating position said first forming support (100) is arranged above said first conveyor belt (11a) and said at least one second conveyor belt (11b), respectively, at such a height as to come into contact with said strip-like elements (51a, 51b) deposited on said first conveyor belt (11a) and on said at least one second conveyor belt (11b), respectively.

15. Plant (1) according to claim 14, wherein said first moving device (15) comprises a gripping unit for said first forming support (100), said gripping unit being movable along a first substantially horizontal direction y and along a second substantially vertical direction z.

16. Plant (1) according to claim 14 or 15, wherein the crown structure building line (4) further comprises a handling device movable between a pick up position of said first forming support (100) from a storage station and an operating position where said first forming support (100) is transferred to said first moving device (15).

17. Plant (1) according to any one of claims 14 to 16, wherein each of said first deposition apparatus (40a) and at least one second deposition apparatus comprises a respective gripping member (41a, 41b) of said strip-like elements (51a, 51b), said respective gripping member (41a, 41b) being movable between a first operating position where said strip-like elements (51a, 51b) are picked up and a second operating position where said strip-like elements (51a, 51b) are deposited on said first conveyor belt (11a) and on said at least one second conveyor belt (11b), respectively.

18. Plant (1) according to claim 17, wherein said gripping member (41a, 41b) comprises at least one retaining element (42a) of said strip-like elements (51a, 51b).

19. Plant (1) according to any one of claims 14 to 18, wherein said first conveyor belt (11a) and at least one second conveyor belt (11b) comprise, at at least one respective surface portion, at least one respective magnetic element or device (22a).

20. Plant (1) according to any one of claims 14 to 19, wherein said first forming support (100) comprises, at at least a surface portion thereof, at least one magnetic element or device (101).

21. Plant (1) according to any one of claims 14 to 20, wherein the crown structure building line (4) further comprises:
- a first apparatus (30a) for feeding a first reinforced band-like element (52a) close to said first conveyor belt (11a);
- a first cutting member (35a) of said first reinforced band-like element (52a);
- at least one second apparatus for feeding at least one second reinforced band-like element close to said at least one second conveyor belt (11b);
- at least one second cutting member of said at least one second reinforced band-like element.

22. Plant (1) according to any one of claims 14 to 21, wherein the crown structure building line (4) further comprises:
- at least one first pressing member (18a) associated with said first conveyor belt (11a) and adapted to act in thrust against said first forming support (100) when said first forming support (100) is in said first operating position, and
- at least one second pressing member (18b) associated with said at least one second conveyor belt (11b) and adapted to act in thrust against said first forming support (100) when said first forming support (100) is in said at least one second operating position.

23. Plant (1) according to any one of claims 14 to 22, further comprising at least one first contrast roller (17a) acting against said first conveyor belt (11a) and at least one second contrast roller (17b) acting against at least one second conveyor belt (11b).

24. Plant (1) according to any one of claims 14 to 23, wherein the crown structure building line (4) further comprises a deposition apparatus for depositing a pair of elongated elements (71a) made of elastomeric material on said first forming support (100) or on said first conveyor belt (11a).

25. Plant (1) according to claim 16, wherein the crown structure building line (4) further comprises:
- a further forming support;
- a further device for moving said further forming support between said first operating position and said at least one second operating position;
- a further handling device movable between said storage station and an operating position where said further forming support is transferred to said further moving device.

## Patentansprüche

1. Prozess zum Bauen von Reifen für Fahrzeugräder, umfassend:
- Fertigen einer Karkassenstruktur;
- Fertigen einer Kronenstruktur;
- Zuordnen der Kronenstruktur in einer radial äußeren Position bezüglich des Karkassenstruktur;
wobei das Fertigen einer Kronenstruktur das Bauen einer Gürtelstruktur (50a) auf einer ersten Ausbildungshalterung (100) umfasst;
wobei das Bauen der Gürtelstruktur (50a) folgendes umfasst:
- sequentielles Ablagern, auf einem ersten Förderband (11a), einer vorgegebenen Anzahl streifenartiger Elemente (51a);
- sequentielles Ablagern, auf zumindest einem zweiten Förderband (11b), einer vorgegebenen Anzahl streifenartiger Elemente (51b);
- Überführen der streifenartigen Elemente (51a) vom ersten Förderband (11a) zur ersten Ausbildungshalterung (100) zum Bauen einer ersten Gürtelschicht (60a) auf der ersten Ausbildungshalterung (100);
- Bewegen der ersten Ausbildungshalterung (100) zum zumindest einen zweiten Förderband (11b);
- Überführen der streifenartigen Elemente (51b) vom zumindest einen zweiten Förderband (11b) zur ersten Ausbildungshalterung (100) zum Bauen von zumindest einer zweiten Gürtelschicht (50b) auf der ersten Ausbildungshalterung (100) in einer radial äußeren Position bezüglich der ersten Gürtelschicht (50a);
wobei das Überführen der streifenartigen Elemente (51a) vom ersten Förderband (11a) zur ersten Ausbildungshalterung (100) zumindest teilweise simultan mit zumindest einem Teil des Ablagerns der streifenartigen Elemente (51b) auf dem zumindest einen zweiten Förderband (11b) ausgeführt wird.

2. Prozess nach Anspruch 1, wobei das Bewegen der ersten Ausbildungshalterung (100) zum zumindest einen zweiten Förderband (11b) zumindest teilweise simultan mit zumindest einem Teil des Ablagerns der streifenartigen Elemente (51b) auf dem zumindest einen zweiten Förderband (11b) ausgeführt wird.

3. Prozess nach einem der Ansprüche 1 oder 2, wobei das Ablagern der streifenartigen Elemente (5a) auf dem ersten Förderband (11a) zumindest teilweise simultan mit zumindest einem Teil des Ablagerns der streifenartigen Elemente (51b) auf dem zumindest einen zweiten Förderband (11b) ausgeführt wird.

4. Prozess nach einem der vorhergehenden Ansprüche, wobei das Bauen der Gürtelstruktur (50a), vor dem Überführen der streifenartigen Elemente vom ersten Förderband (11a) zur ersten Ausbildungshalterung (100), das Bewegen der ersten Ausbildungshalterung (100) zum ersten Förderband (11a) umfasst.

5. Prozess nach Anspruch 4, wobei das Bewegen der ersten Ausbildungshalterung (100) zum ersten Förderband (11a) zumindest teilweise simultan mit zumindest einem Teil des Ablagerns der streifenartigen Elemente (51a) auf dem ersten Förderband (11a) ausgeführt wird.

6. Prozess nach einem der Ansprüche 4 oder 5, wobei das Bewegen der ersten Ausbildungshalterung (100) zum ersten Förderband (11a) zumindest teilweise simultan mit zumindest einem Teil des Ablagerns der streifenartigen Elemente (51b) auf dem zumindest einen zweiten Förderband (11b) ausgeführt wird.

7. Prozess nach einem der vorhergehenden Ansprüche, wobei das Überführen der streifenartigen Elemente (51a, 51b) vom ersten Förderband (11a) bzw. vom zumindest einen zweiten Förderband (11b) zur ersten Ausbildungshalterung (100) das Ausüben einer magnetischen Anziehungskraft auf die streifenartigen Elemente (51a, 51b) durch die erste Ausbildungshalterung (100) umfasst.

8. Prozess nach einem der vorhergehenden Ansprüche, wobei das Bauen der Gürtelstruktur (50) ferner folgendes umfasst:
- Zuführen eines ersten verstärkten, bandartigen Elements (52a) und zumindest eines zweiten verstärkten, bandartigen Elements zu zumindest einem jeweiligen Schneidglied (35a), das eng am ersten Förderband (11a) bzw. am zumindest einen zweiten Förderband (11b) angeordnet ist;
- wiederholtes Zurechtschneiden des ersten verstärkten, bandartigen Elements (52a) und des zumindest einen zweiten verstärkten, bandartigen Elements zum Ausbilden der streifenartigen Elemente (51a, 51b) aus dem ersten verstärkten, bandartigen Element (52a) bzw. dem zumindest einen zweiten verstärkten, bandartigen Element;
- sequentielles Überführen von jedem der streifenartigen Elemente (51a, 51b) auf das erste Förderband (11a) bzw. auf das zumindest eine zweite Förderband (11b).

9. Prozess nach Anspruch 8, wobei das Zuführen des zumindest einen zweiten verstärkten, bandartigen Elements zum zumindest einen zweiten Förderband (11b) zumindest teilweise simultan mit zumindest einem Teil des Ablagerns der streifenartigen Elemente (51a) auf dem ersten Förderband (11a) ausgeführt wird.

10. Prozess nach einem der Ansprüche 8 oder 9, wobei das sequentielle Überführen von jedem der streifenartigen Elemente (51a, 51b) auf das erste Förderband (11a) bzw. das zumindest eine zweite Förderband (11b) das Ausüben einer magnetischen Anziehungskraft durch ein jeweiliges Greifglied (41a) auf die streifenartigen Elemente (51a, 51b) umfasst.

11. Prozess nach einem der vorhergehenden Ansprüche, wobei das Überführen der streifenartigen Elemente (51a, 51b) auf die erste Ausbildungshalterung (100) vom ersten Förderband (11a) bzw. vom zumindest einen zweiten Förderband (11b) erst dann beginnt, wenn die streifenartigen Elemente (51a, 51b) eine Position erreichen, in der sie mit der ersten Ausbildungshalterung (100) und mit dem ersten Förderband (11a) bzw. dem zumindest einen zweiten Förderband (11b) in Berührung sind.

12. Prozess nach einem der vorhergehenden Ansprüche, wobei das Bauen der Gürtelstruktur (50), nach dem Ablagern der streifenartigen Elemente (51a) auf dem ersten Förderband (11a) und vor dem Überführen der streifenartigen Elemente (51a) vom ersten Förderband (11a) zur ersten Ausbildungshalterung (100), ferner das Ablagern eines Paars gestreckter Elemente 71a) aus Elastomermaterial auf dem ersten Förderband (11a) in derartiger Position umfasst, dass sie jedes von einem jeweiligen Endabschnitt der streifenartigen Elemente (51a) überlappt sind.

13. Prozess nach einem der vorhergehenden Ansprüche, wobei das Bauen der Gürtelstruktur (50), sobald die Bewegung der ersten Ausbildungshalterung (100) zum zumindest einen zweiten Förderband (11b) hin begonnen hat, das Bewegen einer weiteren Ausbildungshalterung zum ersten Förderband (11a) hin umfasst.

14. Anlage (1) zum Bauen von Reifen für Fahrzeugräder, umfassend:
- eine Karkassenstrukturbaulinie (2);
- eine Kronenstrukturbaulinie (4);
wobei die Kronenstrukturbaulinie (4) folgendes umfasst:
- ein erstes Förderband (11a), das parallel zu einer Richtung x ausgerichtet ist;
- zumindest ein zweites Förderband (11b), das parallel zum ersten Förderband (11a) ausgerichtet ist;
- ein erste Ablagerungsvorrichtung (40a) für eine vorgegebene Anzahl streifenartiger Elemente (51a) auf das erste Förderband (11a);
- zumindest eine zweite Ablagerungsvorrichtung für eine vorgegebene Anzahl streifenartiger Elemente (51b) auf das zumindest eine zweite Förderband (11b);
- eine erste Ausbildungshalterung (100);
- eine erste Bewegungsvorrichtung (15) zum Bewegen der ersten Ausbildungshalterung (100) entlang einer senkrecht zur Richtung x verlaufenden Richtung zwischen einer ersten Arbeitsposition, in der sie auf dem ersten Förderband (11a) angeordnet wird, und zumindest einer zweiten Arbeitsposition, in der sie auf dem zumindest einen zweiten Förderband (11b) angeordnet wird; wobei die erste Ausbildungshalterung (100) in der ersten Arbeitsposition und der zumindest einen zweiten Arbeitsposition in einer derartigen Höhe über dem ersten Förderband (11a) und dem zumindest einen zweiten Förderband (11b) angeordnet ist, dass sie mit den streifenartigen Elementen (51a, 51b), die auf dem ersten Förderband (11a) bzw. auf dem zumindest einen zweiten Förderband (11b) abgelagert sind, in Berührung kommen.

15. Anlage (1) nach Anspruch 14, wobei die erste Bewegungsvorrichtung (15) eine Greifeinheit für die erste Ausbildungshalterung (100) umfasst, wobei die Greifeinheit entlang einer ersten, im Wesentlichen horizontalen Richtung y und entlang einer zweiten, im Wesentlichen vertikalen Richtung z beweglich ist.

16. Anlage (1) nach einem der Ansprüche 14 oder 15, wobei die Kronenstrukturbaulinie (4) ferner eine Handhabungsvorrichtung umfasst, die zwischen einer Aufnahmeposition für die erste Ausbildungshalterung (100) aus einer Lagerstation und einer Arbeitsposition beweglich ist, in der die erste Ausbildungshalterung (100) zur ersten Bewegungsvorrichtung (15) überführt wird.

17. Anlage (1) nach einem der Ansprüche 14 bis 16, wobei jede der ersten Ablagerungsvorrichtung (40a) und zumindest einen zweiten Ablagerungsvorrichtung ein jeweiliges Greifglied (41a, 41b) der streifenartigen Elemente (51a, 51b) umfasst, wobei das jeweilige Greifglied (41a, 41b) zwischen einer ersten Arbeitsposition, in der die streifenartigen Elemente (51a, 51b) aufgenommen werden, und einer zweiten Arbeitsposition beweglich ist, in der die streifenartigen Elemente (51a, 51b) auf dem ersten Förderband (11a) bzw. dem zumindest einen zweiten Förderband (11b) abgelagert werden.

18. Anlage (1) nach Anspruch 17, wobei das Greifglied (41a, 41b) zumindest ein Halteelement (42a) der streifenförmigen Elemente (51a, 51b) umfasst.

19. Anlage (1) nach einem der Ansprüche 14 bis 18, wobei das erste Förderband (11a) und das zumindest eine zweite Förderband (11b) an zumindest einem jeweiligen Oberflächenabschnitt zumindest ein jeweiliges Magnetelement oder -gerät (22a) umfassen.

20. Anlage (1) nach einem der Ansprüche 14 bis 19, wobei die erste Ausbildungshalterung (100) an zumindest einem Oberflächenabschnitt davon zumindest ein Magnetelement oder -gerät (101) umfasst.

21. Anlage (1) nach einem der Ansprüche 14 bis 20, wobei die Kronenstrukturbaulinie (4) ferner folgendes umfasst:
- eine erste Vorrichtung (30a) zum Zuführen eines ersten verstärkten, bandartigen Elements (52a) eng an das erste Förderband (11a);
- ein erstes Schneidglied (35a) des ersten verstärkten, bandartigen Elements (52a);
- zumindest eine zweite Vorrichtung zum Zuführen von zumindest einem zweiten verstärkten, bandartigen Element eng an das zumindest eine zweite Förderband (11b);
- zumindest ein zweites Schneidglied des zumindest einen zweiten verstärkten, bandartigen Elements.

22. Anlage (1) nach einem der Ansprüche 14 bis 21, wobei die Kronenstrukturbaulinie (4) ferner folgendes umfasst:
- zumindest ein erstes Pressglied (18a), das dem ersten Förderband (11a) zugeordnet ist und zur Schubwirkung gegen die erste Ausbildungshalterung (100) geeignet ist, wenn sich die erste Ausbildungshalterung (100) in der ersten Arbeitsposition befindet, und
- zumindest ein erstes Pressglied (18a), das dem zumindest einen zweiten Förderband (11b) zugeordnet ist und zur Schubwirkung gegen die erste Ausbildungshalterung (100) geeignet ist, wenn sich die erste Ausbildungshalterung (100) in der zumindest einen zweiten Arbeitsposition befindet.

23. Anlage (1) nach einem der Ansprüche 14 bis 22, ferner umfassend zumindest eine erste Kontrastwalze (17a), die gegen das erste Förderband (11a) wirkt, und zumindest eine zweite Kontrastrolle (17b), die gegen das zumindest eine zweite Förderband (11b) wirkt.

24. Anlage (1) nach einem der Ansprüche 14 bis 23, wobei die Kronenstrukturbaulinie (4) ferner eine Ablagerungsvorrichtung zum Ablagern eines Paars gestreckter Elemente (71a) aus Elastomermaterial auf der ersten Ausbildungshalterung (100) oder auf dem ersten Förderband (11a) umfasst.

25. Anlage (1) nach Anspruch 16, wobei die Kronenstrukturbaulinie (4) ferner folgendes umfasst:
- eine weitere Ausbildungshalterung;
- eine weitere Vorrichtung zum Bewegen der weiteren Ausbildungshalterung zwischen der ersten Arbeitsposition und der zumindest einen zweiten Arbeitsposition;
- eine weitere Handhabungsvorrichtung, die zwischen der Lagerposition und einer Arbeitsposition beweglich ist, in der die weitere Ausbildungshalterung zur weiteren Bewegungsvorrichtung überführt wird.

## Revendications

1. Processus de construction de pneus pour roues de véhicule, comprenant le fait :
- de fabriquer une structure de carcasse ;
- de fabriquer une structure de sommet ;
- d'associer la structure de sommet dans une position radialement externe par rapport à la structure de carcasse ;
dans lequel la fabrication d'une structure de sommet comprend la construction d'une structure de ceinture (50a) sur un premier support de formation (100) ;
dans lequel la construction de ladite structure de ceinture (50a) comprend le fait :
- de déposer successivement, sur une première courroie transporteuse (11a), un nombre prédéterminé d'éléments en forme de bande (51a) ;
- de déposer successivement, sur au moins une deuxième courroie transporteuse (11b), un nombre prédéterminé d'éléments en forme de bande (51b);
- de transférer lesdits éléments en forme de bande (51a) de ladite première courroie transporteuse (11a) audit premier support de formation (100) de façon à construire une première couche de ceinture (50a) sur ledit premier support de formation (100) ;
- de déplacer ledit premier support de formation (100) jusqu'à ladite au moins une deuxième courroie transporteuse (11b) ;
- de transférer lesdits éléments en forme de bande (51b) de ladite au moins une deuxième courroie transporteuse (11b) audit premier support de formation (100) de façon à construire au moins une deuxième couche de ceinture (50b) sur ledit premier support de formation (100) dans une position radialement externe par rapport à ladite première couche de ceinture (50a) ; où le transfert desdits éléments en forme de bande (51a) de ladite première courroie transporteuse (11a) audit premier support de formation (100) est au moins partiellement effectué simultanément avec au moins une partie du dépôt desdits éléments en forme de bande (51b) sur ladite au moins une deuxième courroie transporteuse (11b).

2. Processus selon la revendication 1, dans lequel le déplacement dudit premier support de formation (100) jusqu'à ladite au moins une deuxième courroie transporteuse (11b) est au moins partiellement effectué simultanément avec au moins une partie du dépôt desdits éléments en forme de bande (51b) sur ladite au moins une deuxième courroie transporteuse (11b).

3. Processus selon la revendication 1 ou 2, dans lequel le dépôt desdits éléments en forme de bande (51a) sur ladite première courroie transporteuse (11a) est au moins partiellement effectué simultanément avec au moins une partie du dépôt desdits éléments en forme de bande (51b) sur ladite au moins une deuxième courroie transporteuse (11b).

4. Processus selon l'une quelconque des revendications précédentes, dans lequel la construction de ladite structure de ceinture (50a) comprend, avant le transfert desdits éléments en forme de bande de ladite première courroie transporteuse (11a) audit premier support de formation (100), le déplacement dudit premier support de formation (100) jusqu'à ladite première courroie transporteuse (11a).

5. Processus selon la revendication 4, dans lequel le déplacement dudit premier support de formation (100) jusqu'à ladite première courroie transporteuse (11a) est au moins partiellement effectué simultanément avec au moins une partie du dépôt desdits éléments en forme de bande (51a) sur ladite première courroie transporteuse (11a).

6. Processus selon la revendication 4 ou 5, dans lequel le déplacement dudit premier support de formation (100) jusqu'à ladite première courroie transporteuse (11a) est au moins partiellement effectué simultanément avec au moins une partie du dépôt desdits éléments en forme de bande (51b) sur ladite au moins une deuxième courroie transporteuse (11b).

7. Processus selon l'une quelconque des revendications précédentes, dans lequel le transfert desdits éléments en forme de bande (51a, 51b) de ladite première courroie transporteuse (11a) et de ladite au moins une deuxième courroie transporteuse (11b), respectivement, audit premier support de formation (100) comprend le fait d'exercer une force d'attraction magnétique sur lesdits éléments en forme de bande (51a, 51b) par ledit premier support de formation (100).

8. Processus selon l'une quelconque des revendications précédentes, dans lequel la construction de ladite structure de ceinture (50) comprend en outre le fait :
- de faire avancer un premier élément en forme de bande renforcé (52a) et au moins un deuxième élément en forme de bande renforcé jusqu'à au moins un élément de coupe respectif (35a) agencé à proximité de ladite première courroie transporteuse (11a) et de ladite au moins une deuxième courroie transporteuse (11b), respectivement ;
- de couper de manière répétée à la dimension voulue ledit premier élément en forme de bande renforcé (52a) et au moins un deuxième élément en forme de bande renforcé pour former lesdits éléments en forme de bande (51a, 51b) à partir dudit premier élément en forme de bande renforcé (52a) et à partir dudit au moins un deuxième élément en forme de bande renforcé, respectivement ;
- de transférer successivement chacun desdits éléments en forme de bande (51a, 51b) sur ladite première courroie transporteuse (11a) et sur ladite au moins une deuxième courroie transporteuse (11b), respectivement.

9. Processus selon la revendication 8, dans lequel l'avancement dudit au moins un deuxième élément en forme de bande renforcé jusqu'à ladite au moins une deuxième courroie transporteuse (11b) est au moins partiellement effectué simultanément avec au moins une partie du dépôt desdits éléments en forme de bande (51a) sur ladite première courroie transporteuse (11a).

10. Processus selon la revendication 8 ou 9, dans lequel le transfert successif de chacun desdits éléments en forme de bande (51a, 51b) sur ladite première courroie transporteuse (11a) et sur ladite au moins une deuxième courroie transporteuse (11b), respectivement, comprend le fait d'exercer sur lesdits éléments en forme de bande (51a, 51b) une force d'attraction magnétique par un élément de préhension respectif (41a).

11. Processus selon l'une quelconque des revendications précédentes, dans lequel le transfert desdits éléments en forme de bande (51a, 51b) sur ledit premier support de formation (100) de ladite première courroie transporteuse (11a) et de ladite au moins une deuxième courroie transporteuse (11b), respectivement, ne commence que lorsque lesdits éléments en forme de bande (51a, 51b) atteignent une position dans laquelle ils sont en contact avec ledit premier support de formation (100) et avec ladite première courroie transporteuse (11a) et ladite au moins une deuxième courroie transporteuse (11b), respectivement.

12. Processus selon l'une quelconque des revendications précédentes, dans lequel la construction de ladite structure de ceinture (50) comprend en outre, après le dépôt desdits éléments en forme de bande (51a) sur ladite première courroie transporteuse (11a) et avant le transfert desdits éléments en forme de bande (51a) de ladite première courroie transporteuse (11a) audit premier support de formation (100), le dépôt d'une paire d'éléments allongés (71a) réalisés en un matériau élastomère sur ladite première courroie transporteuse (11a) dans une position telle qu'ils soient chacun en chevauchement partiel avec une partie d'extrémité respective desdits éléments en forme de bande (51a).

13. Processus selon l'une quelconque des revendications précédentes, dans lequel la construction de ladite structure de ceinture (50) comprend, une fois que le déplacement dudit premier support de formation (100) vers ladite au moins une deuxième courroie transporteuse (11b) a commencé, le déplacement d'un support de formation supplémentaire jusqu'à ladite première courroie transporteuse (11a).

14. Installation (1) de construction de pneus pour roues de véhicule, comprenant :
- une ligne de construction de structure de carcasse (2) ;
- une ligne de construction de structure de sommet (4) ;
dans laquelle la ligne de construction de structure de sommet (4) comprend :
- une première courroie transporteuse (11a) orientée de manière parallèle à une direction x ;
- au moins une deuxième courroie transporteuse (11b) agencée de manière parallèle à ladite première courroie transporteuse (11a) ;
- un premier appareil de dépôt (40a) d'un nombre prédéterminé d'éléments en forme de bande (51a) sur ladite première courroie transporteuse (11a) ;
- au moins un deuxième appareil de dépôt d'un nombre prédéterminé d'éléments en forme de bande (51b) sur ladite au moins une deuxième courroie transporteuse (11b) ;
- un premier support de formation (100) ;
- un premier dispositif de déplacement (15) pour déplacer ledit premier support de formation (100), le long d'une direction y perpendiculaire à ladite direction x, entre une première position de fonctionnement dans laquelle il est positionné au niveau de ladite première courroie transporteuse (11a) et au moins une deuxième position de fonctionnement dans laquelle il est positionné au niveau de ladite au moins une deuxième courroie transporteuse (11b) ; où, dans ladite première position de fonctionnement et dans ladite au moins une deuxième position de fonctionnement, ledit premier support de formation (100) est agencé au-dessus de ladite première courroie transporteuse (11a) et de ladite au moins une deuxième courroie transporteuse (11b), respectivement, à une hauteur telle qu'il vient en contact avec lesdits éléments en forme de bande (51a, 51b) déposés sur ladite première courroie transporteuse (11a) et sur ladite au moins une deuxième courroie transporteuse (11b), respectivement.

15. Installation (1) selon la revendication 14, dans laquelle ledit premier dispositif de déplacement (15) comprend une unité de préhension pour ledit premier support de formation (100), ladite unité de préhension étant mobile le long d'une première direction essentiellement horizontale y et le long d'une deuxième direction essentiellement verticale z.

16. Installation (1) selon la revendication 14 ou 15, dans laquelle la ligne de construction de structure de sommet (4) comprend en outre un dispositif de manipulation mobile entre une position de ramassage dudit premier support de formation (100) à partir d'une station de stockage et une position de fonctionnement dans laquelle ledit premier support de formation (100) est transféré audit premier dispositif de déplacement (15).

17. Installation (1) selon l'une quelconque des revendications 14 à 16, dans laquelle chacun desdits premier appareil de dépôt (40a) et au moins un deuxième appareil de dépôt comprend un élément de préhension respectif (41a, 41b) desdits éléments en forme de bande (51a, 51b), ledit élément de préhension respectif (41a, 41b) étant mobile entre une première position de fonctionnement dans laquelle lesdits éléments en forme de bande (51a, 51b) sont ramassés et une deuxième position de fonctionnement dans laquelle lesdits éléments en forme de bande (51a, 51b) sont déposés sur ladite première courroie transporteuse (11a) et sur ladite au moins une deuxième courroie transporteuse (11b), respectivement.

18. Installation (1) selon la revendication 17, dans laquelle ledit élément de préhension (41a, 41b) comprend au moins un élément de retenue (42a) desdits éléments en forme de bande (51a, 51b).

19. Installation (1) selon l'une quelconque des revendications 14 à 18, dans laquelle ladite première courroie transporteuse (11a) et au moins une deuxième courroie transporteuse (11b) comprennent, au niveau d'au moins une partie de surface respective, au moins un élément ou dispositif magnétique respectif (22a).

20. Installation (1) selon l'une quelconque des revendications 14 à 19, dans laquelle ledit premier support de formation (100) comprend, au niveau d'au moins une partie de surface de celui-ci, au moins un élément ou dispositif magnétique (101).

21. Installation (1) selon l'une quelconque des revendications 14 à 20, dans laquelle la ligne de construction de structure de sommet (4) comprend en outre :
- un premier appareil (30a) pour faire avancer un premier élément en forme de bande renforcé (52a) à proximité de ladite première courroie transporteuse (11a) ;
- un premier élément de coupe (35a) dudit premier élément en forme de bande renforcé (52a) ;
- au moins un deuxième appareil pour faire avancer au moins un deuxième élément en forme de bande renforcé à proximité de ladite au moins une deuxième courroie transporteuse (11b) ;
- au moins un deuxième élément de coupe dudit au moins un deuxième élément en forme bande renforcé.

22. Installation (1) selon l'une quelconque des revendications 14 à 21, dans laquelle la ligne de construction de structure de sommet (4) comprend en outre :
- au moins un premier élément de pression (18a) associé à ladite première courroie transporteuse (11a) et adapté pour agir en poussée contre ledit premier support de formation (100) lorsque ledit premier support de formation (100) est dans ladite première position de fonctionnement, et
- au moins un deuxième élément de pression (18b) associé à ladite au moins une deuxième courroie transporteuse (11b) et adapté pour agir en poussée contre ledit premier support de formation (100) lorsque ledit premier support de formation (100) est dans ladite au moins une deuxième position de fonctionnement.

23. Installation (1) selon l'une quelconque des revendications 14 à 22, comprenant en outre au moins un premier rouleau de contraste (17a) agissant contre ladite première courroie transporteuse (11a) et au moins un deuxième rouleau de contraste (17b) agissant contre au moins une deuxième courroie transporteuse (11b).

24. Installation (1) selon l'une quelconque des revendications 14 à 23, dans laquelle la ligne de construction de structure de sommet (4) comprend en outre un appareil de dépôt pour le dépôt d'une paire d'éléments allongés (71a) réalisés en un matériau élastomère sur ledit premier support de formation (100) ou sur ladite première courroie transporteuse (11a).

25. Installation (1) selon la revendication 16, dans laquelle la ligne de construction de structure de sommet (4) comprend en outre :
- un support de formation supplémentaire ;
- un dispositif supplémentaire pour déplacer ledit support de formation supplémentaire entre ladite première position de fonctionnement et ladite au moins une deuxième position de fonctionnement ;
- un dispositif de manipulation supplémentaire mobile entre ladite station de stockage et une position de fonctionnement dans laquelle ledit support de formation supplémentaire est transféré audit dispositif de déplacement supplémentaire.
